# EUROPÄISCHE PATENTSCHRIFT

(11) **EP 3 847 499 B1**
(45) Veröffentlichungstag und Bekanntmachung des Hinweises auf die Patenterteilung: **28.02.2024**
(21) Anmeldenummer: 19762964.5
(22) Anmeldetag: 04.09.2019
(51) Int. Cl.: G02B 27/00, G02B 27/01

(54) **VERFAHREN ZUM BETREIBEN EINER BLICKFELDANZEIGEVORRICHTUNG FÜR EIN KRAFTFAHRZEUG**
METHOD FOR OPERATING A FIELD-OF-VISION DISPLAY DEVICE FOR A MOTOR VEHICLE
PROCÉDÉ POUR FAIRE FONCTIONNER UN DISPOSITIF D'AFFICHAGE TÊTE HAUTE POUR UN VÉHICULE À MOTEUR

(30) Priorität: 07.09.2018 DE 102018215272
(43) Veröffentlichungstag der Anmeldung: 14.07.2021
(73) Patentinhaber: Bayerische Motoren Werke Aktiengesellschaft, 80809 München (DE)
(72) Erfinder: HUBER, Wolfgang-Andreas, 82256 Fürstenfeldbruck (DE)
(86) Internationale Anmeldenummer: PCT/EP2019/073522
(87) Internationale Veröffentlichungsnummer: WO 2020/049018

(56) Entgegenhaltungen:
- WO-A1-2018/095935
- DE-A1- 2 948 721
- DE-A1-102009 045 169
- DE-A1-102015 222 842

## Beschreibung

### Technisches Gebiet

Die Erfindung betrifft ein Verfahren zum Betreiben einer Blickfeldanzeigevorrichtung, insbesondere eines Head-Up-Displays für ein Kraftfahrzeug, sowie eine entsprechende Steuerungseinrichtung und ein damit ausgestattetes Kraftfahrzeug.

### Technischer Hintergrund

Blickfeldanzeigevorrichtungen in einem Kraftfahrzeug sind insbesondere unter der Bezeichnung Head-up-Display (HUD) bekannt. Damit wird ein Anzeigeinhalt, wie eine Angabe über eine Geschwindigkeitsbegrenzung, als ein virtuelles Anzeigebild in das Blickfeld des Fahrers vor dem Kraftfahrzeug eingeblendet, sodass er seinen Blick nicht von der Straße abwenden muss. Hierzu umfasst eine Blickfeldanzeigevorrichtung typischerweise eine Projektionseinheit, die durch ein unterhalb einer Armaturenbrettoberseite untergebrachtes Display mit einer geeigneten Projektionsoptik ein Projektionslichtstrahlenbündel mit gewünschtem Anzeigeinhalt erzeugt und auf eine teilweise transparente Projektionsscheibe, beispielsweise die Frontscheibe des Kraftfahrzeugs, projiziert, von der es zum Fahrer hin reflektiert wird.

Bei dieser herkömmlichen Bauart weist das HUD ein relativ kleines Field-of-View auf, welches in der Regel nur bis knapp an den Horizont reicht, und die Entfernung des virtuellen Anzeigebilds ist durch den optischen Aufbau der Projektionseinheit festgelegt. Einer Vergrößerung des Field-of-View steht der begrenzte Bauraum innerhalb des Armaturenbretts entgegen. Insbesondere nimmt die bekannte Projektionsoptik viel Platz in vertikaler Richtung ein. Der Fahrer blickt dabei gleichsam in ein Fernrohr, sodass für ihn ein nahes, am Display im HUD-Inneren erzeugtes Anzeigebild in der Ferne vor dem Kraftfahrzeug erscheint. Damit sind entsprechend einer "Öffnung des Fernrohrs" nur begrenzte Raumwinkel darstellbar, in denen das HUD-Anzeigebild dem Blick durch die Frontscheibe überlagert werden kann. Kontaktanaloge Einblendungen, wie beispielsweise aus Augmented-Reality bekannt, sind außerhalb dieses begrenzten Raumwinkels nicht möglich.

Andererseits ist beispielsweise aus DE 10 2009 054 232 A1 ein Head-up-Display zur stereoskopischen Informationsanzeige in einem Kraftfahrzeug bekannt, das Bilderzeugungsmittel zur Erzeugung zweier unterschiedlicher, für die beiden Augen eines Insassen bestimmter Einzelbilder und eine Anzeigeeinheit aufweist, auf welcher Leuchtpunkte erzeugbar sind, deren Lichtstrahlen durch Spiegelung an der Windschutzscheibe des Kraftfahrzeugs für den Insassen sichtbar sind. Ferner sind im Strahlengang zwischen der Anzeigeeinheit und der Windschutzscheibe Ablenkmittel, wie z. B. eine matrixartige Anordnung kleiner Linsen, vorgesehen, die Lichtstrahlen unterschiedlicher Leuchtpunkte in unterschiedliche Abstrahlrichtungen ablenken. Zudem sorgen Bildpunktzuordnungsmittel für eine derartige Zuordnung von Bildpunkten der Einzelbilder zu Leuchtpunkten der Anzeigeeinheit, dass für das linke Auge des Insassen das dafür bestimmte Einzelbild und für das rechte Auge des Insassen das dafür bestimmte Einzelbild sichtbar ist. Eine autostereoskopische Displayanzeige dieser Art kann für eine kontaktanaloge Darstellung der Inhalte besonders günstig sein. Weitere relevante Dokumente sind DE 10 2015 222842 und DE 29 48 721.

Bei Blickfeldanzeigevorrichtungen sind in der Regel zusätzliche Maßnahmen vorgesehen, die Störreflexionen von Umgebungslicht an deren Bauteilen, die zu einer Blendung des Benutzers führen könnten, unterbinden. Hierzu wird bei einem herkömmlichen HUD beispielsweise eine Deckscheibe, die die Projektionseinheit nach außen verschließt, geometrisch entspiegelt (sogenannte Glaretrap). Daraus bekannte Entspiegelungstechniken eignen sich allerdings nicht für ein direkt gegenüber der Windschutzscheibe angeordnetes Display.

Es ist Aufgabe der vorliegenden Erfindung, ein besonders im Hinblick auf die Sicherheit und/oder den Komfort eines oder mehrerer Benutzer in jeweils unterschiedlichen (Fahr-)Situationen verbessertes Betriebsverfahren für eine Blickfeldanzeigevorrichtung, insbesondere für ein Kraftfahrzeug, bereitzustellen.

### Offenbarung der Erfindung

Diese Aufgabe wird durch ein Verfahren zum Betreiben einer Blickfeldanzeigevorrichtung gemäß Anspruch 1, eine entsprechende Steuerungseinheit, ein Computerprogramm sowie ein Kraftfahrzeug gemäß den nebengeordneten Ansprüchen gelöst. Weitere Ausgestaltungen sind in den abhängigen Ansprüchen angegeben. Alle in den Ansprüchen und der Beschreibung für das Verfahren genannten weiterführenden Merkmale und Wirkungen gelten auch in Bezug auf die Blickfeldanzeigevorrichtung selbst, die Steuerungseinheit, das Computerprogramm oder das Kraftfahrzeug, wie auch umgekehrt.

Gemäß einem ersten Aspekt ist ein Verfahren zum Betreiben einer Blickfeldanzeigevorrichtung, insbesondere für ein Kraftfahrzeug, vorgesehen. Die Blickfeldanzeigevorrichtung umfasst eine elektrisch ansteuerbare flächige Pixelanordnung, insbesondere mindestens einen Flachbildschirm oder eine andersartige zweidimensionale Pixelmatrix, zur Erzeugung eines Projektionslichtstrahlenbündels mit einem gewünschten Anzeigeinhalt. Ferner umfasst die Blickfeldanzeigevorrichtung eine auf der flächigen Pixelanordnung angeordnete reflexunterdrückende Umlenkanordnung, die eine oder mehrere sich entlang der flächigen Pixelanordnung in einem vorbestimmten spitzen Winkel dazu und parallel zueinander erstreckende ebene Reflexionsfläche(n) zum Projizieren des erzeugten Projektionslichtstrahlenbündels auf eine teilweise transparente reflektierende Projektionsscheibe, insbesondere eine Frontscheibe des Kraftfahrzeugs, umfasst, wodurch dahinter ein in ein Blickfeld eines Benutzers (z. B. des Fahrers oder eines anderen Insassen des Kraftfahrzeugs) eingeblendetes virtuelles Anzeigebild erzeugt wird. Dabei ist/sind die Rückseite(n) der Reflexionsfläche(n) zu einer Störreflexunterdrückung lichtabsorbierend ausgebildet.

Das Verfahren umfasst folgende Schritte:
- Bereitstellen mindestens eines (Fahr-)Situationsparameters und
- Nutzen jeweils unterschiedlicher Flächensegmente der (groß)flächigen Pixelanordnung zur Erzeugung eines gewünschten Anzeigeinhalts abhängig von dem/den bereitgestellten (Fahr-)Situationsparameter(n). Durch eine derartige flexible, (fahr-)situationsabhängig angepasste Auswahl geeigneter Flächensegmente für einen im Übrigen vorgegebenen Anzeigeinhalt können beispielsweise die Sicherheit und/oder der Komfort eines oder mehrerer Benutzer der Blickfeldanzeigevorrichtung deutlich erhöht werden.

Der Begriff "flächig" bedeutet dabei ganz allgemein, dass sich die Pixelanordnung in Form einer zweidimensionalen Pixelmatrix über eine Fläche erstreckt, die zumindest bereichsweise eben oder aber gekrümmt oder gewölbt sein kann. Insbesondere kann die flächige Pixelanordnung bei Bedarf einer Wölbung der Oberseite der Instrumententafel eines Kraftfahrzeugs angepasst sein, beispielsweise indem sie gestuft oder geschachtelt aus mehreren kleineren Teilflächen, wie z. B. ebenen Displays, aufgebaut ist.

Die mehreren zueinander parallelen Reflexionsflächen der reflexunterdrückenden Umlenkanordnung können untereinander gleich ausgebildet sein oder aber sich in deren Form oder Größe voneinander unterscheiden. Abhängig von deren Form und Größe kann deren Abstand voneinander in einer zu deren Erstreckungsrichtung senkrechten Richtung derart gewählt sein, dass eine nahezu vollständige Störreflexunterdrückung und eine im Wesentlichen verlustfreie und formerhaltende Umlenkung des Projektionslichtstrahlenbündels gewährleistet sind. Einige Beispiele hierfür sind weiter unten angegeben. Für die Rückseiten der Reflexionsflächen ist grundsätzlich jede an sich bekannte sonnenlichtabsorbierende Beschichtung geeignet, beispielsweise eine matte schwarze Schicht. (Der Begriff "im Wesentlichen" kann hierin insbesondere eine herstellungs- oder konstruktionsbedingte mögliche Abweichung im Rahmen des dargelegten Funktionsprinzips bedeuten, die beispielsweise nicht mehr als etwa 10% von betreffenden geeigneten Messgrößen betragen kann.)

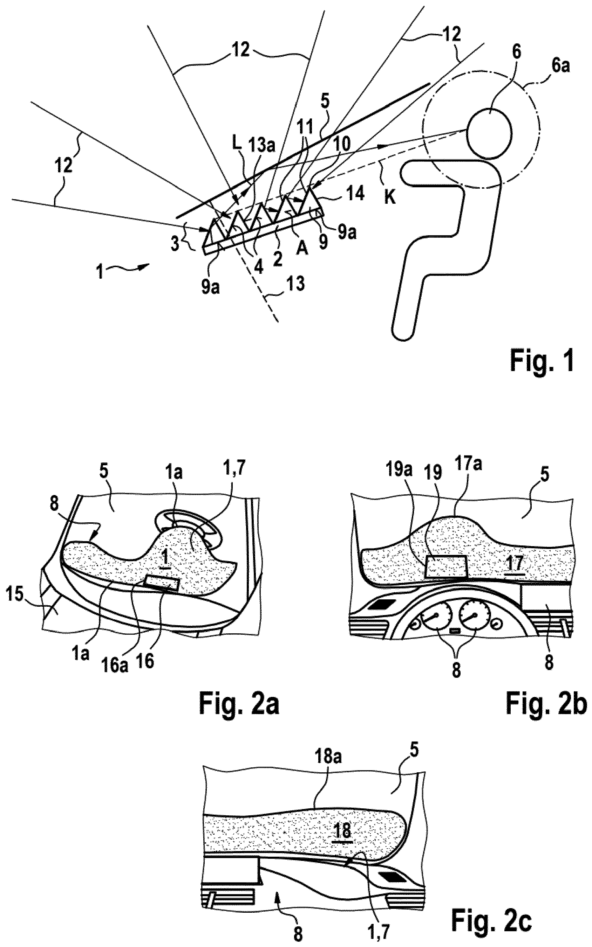

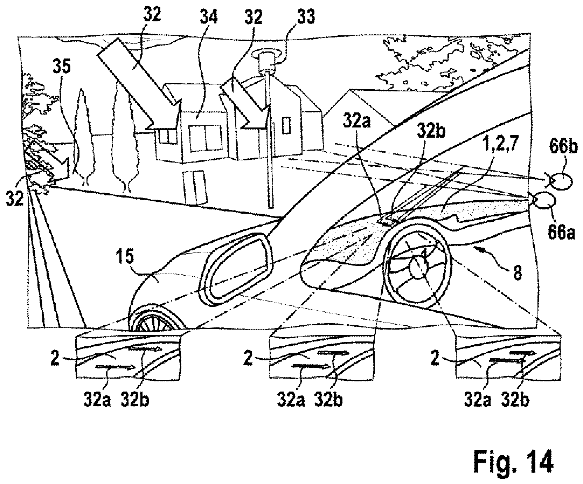

Im Gegensatz zu der eingangs erwähnten herkömmlichen HUD-Bauart mit einer im Inneren der Instrumententafel eines Kraftfahrzeugs untergebrachten Projektionsoptik hat eine Blickfeldanzeigevorrichtung der hierin dargelegten Art einen deutlich flacheren Aufbau und kann beispielsweise mit nur wenigen cm Einbautiefe in einer Oberseite der Instrumententafel eingebaut oder nachträglich darauf montiert sein. Dies macht eine signifikante Erweiterung des Field-of-View der Blickfeldanzeigevorrichtung, beispielsweise auch vertikal deutlich über den Horizont hinaus, möglich, was sich insbesondere für kontaktanaloge Darstellungen für den Fahrer und andere Insassen zur Unterstützung der Navigation oder beim autonomen Fahren und/oder für einen Multi-User-Betrieb mit mehreren Benutzern gleichzeitig eignet (vgl. Fig. 2a-2d und 14). Insbesondere ist damit ein echt kontaktanaloger 3D-Effekt (Stereo-Augmented-Reality) möglich, wobei die kontaktanaloge Darstellung sowohl binokular als auch monokular sein kann.

Die flächige Pixelanordnung kann hierzu in an sich bekannter Weise, beispielsweise gemäß DE 10 2009 054 232 A1, zur autostereoskopischen oder 3D-Darstellung ausgebildet sein. D. h. eine solche flächige Pixelanordnung kann von einer Bilderzeugungseinheit und/oder einer Steuerungseinheit derart angesteuert werden, dass zwei verschiedene 2D-Bilder das linke und das rechte Auge des Benutzers erreichen, um bei ihm einen räumlichen Eindruck des dargestellten virtuellen Anzeigebilds zu bewirken, ohne Hilfsmittel wie z. B. 3D-Brillen direkt vor seinen Augen. Auf diese Weise können beispielsweise für den Fahrer eines Kraftfahrzeugs als dreidimensional wahrgenommene Darstellungen in beliebigen Entfernungen zwischen ungefähr 1 m und bis hin zu unendlich weit von seinen Augen erzeugt werden. Dabei sind grundsätzlich alle Konvergenzebenen simultan realisierbar, was eine Immersion in eine virtuelle 3D-Welt ermöglicht. Die flächige Pixelanordnung kann aber auch zumindest bereichsweise zur 2D-Darstellung, d. h. ohne Tiefeneindruck, ausgebildet sein.

Die Projektionsscheibe ist im Betrieb der Blickfeldanzeigevorrichtung derart oberhalb der reflexunterdrückenden Umlenkanordnung angeordnet, dass sie das umgelenkte Projektionslichtstrahlenbündel zu den Augen des Benutzers reflektiert, wodurch hinter der Projektionsscheibe ein virtuelles Anzeigebild entsteht. Insbesondere im Falle einer Frontscheibe des Kraftfahrzeugs, und analog auch in allen anderen Anwendungsfällen, kann in der Ansteuerung der flächigen Pixelanordnung beispielsweise eine Korrektur einer etwaigen Krümmung der Projektionsscheibe durch einen geeigneten Korrekturalgorithmus im Rahmen der Bilderzeugung implementiert sein. Insbesondere kann hierzu in der Steuerungseinheit eine einmalige Systemjustierung für eine individuelle Frontscheibengeometrie implementiert sein. Eine Basisauslegung wird dabei anhand vom Hersteller bereitgestellter CAD-Daten für den jeweiligen Fahrzeugtyp ermittelt. Die optischen Eigenschaften von Frontscheiben unterliegen einer Streuung im Produktionsprozess, die zu Abweichungen von den CAD-Daten führen kann, die mittels einer individuellen Systemjustierung ermittelt und z. B. durch einen geeigneten Algorithmus als Korrekturfunktion zusätzlich zu den Warping-Daten einer idealen Frontscheibe in der Steuerungseinheit der Blickfeldanzeigevorrichtung hinterlegt und zur Korrektur im Betrieb des HUDs herangezogen werden können. Hierzu kann z. B. ein geeignetes Testbild mit einem Justage-Muster (z. B. Schachbrettmuster) vom HUD über die Frontscheibe projiziert und das resultierende virtuelle Anzeigetestbild durch ein System aus Bilderfassung und Recheneinheit analysiert werden. Durch eine solche Korrektur können im Betrieb des HUDs aus Sicht des Benutzers optische Eigenschaften gewährleistet werden, die denjenigen einer idealen Frontscheibe entsprechen. Nach dem gleichen Prinzip können auch herstellungsbedingte individuelle Abweichungen anderer Komponenten der Blickfeldanzeigevorrichtung, z. B. der Bilderzeugungseinheit, der flächigen Pixelanordnung und/oder der reflexunterdrückenden Umlenkanordnung, kompensiert werden.

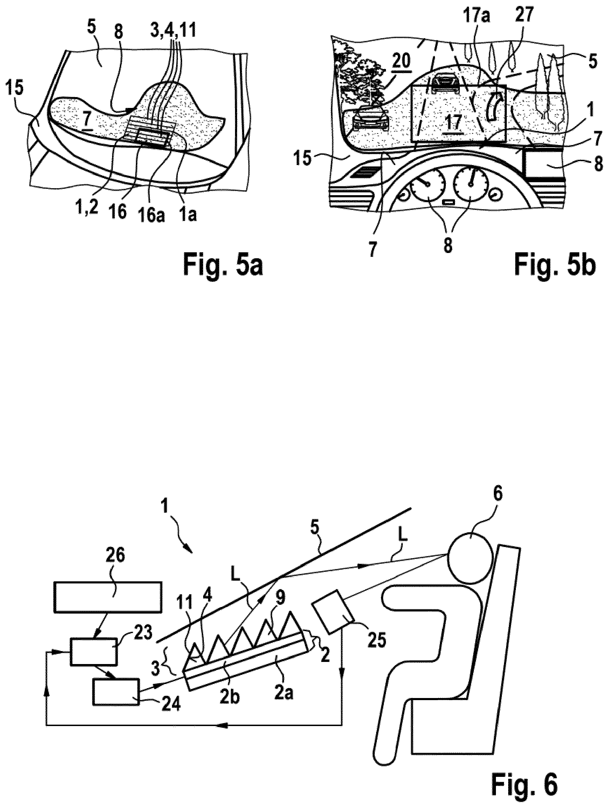

Insbesondere kann das Bereitstellen mindestens eines (Fahr-) Situationsparameters das Erfassen einer aktuellen Benutzerposition, z. B. einer Augenposition oder einer Blickrichtung, umfassen. Dies kann beispielsweise durch das Eye-Tracking oder andere bekannte Mittel implementiert sein (vgl. Fig. 6).

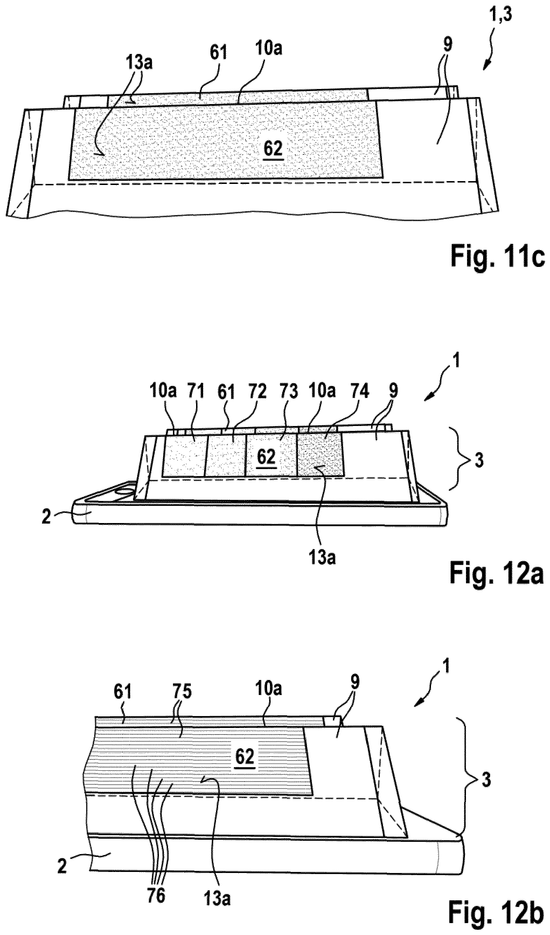

Abhängig von der bereitgestellten aktuellen Benutzerposition wird bei einer Aufteilung eines darzustellenden Objekts auf zwei oder mehr der sich entlang der flächigen Pixelanordnung parallel zueinander erstreckenden ebenen Reflexionsflächen ein derartiger seitlicher Versatz von auf benachbarte Reflexionsflächen zukommenden Objektanteilen innerhalb der flächigen Pixelanordnung erzeugt, dass der Aufteilung entsprechende Anteile des virtuellen Objekts bei seitlichen Verschiebungen des Kopfes des Benutzers weiterhin parallaxenfrei dargestellt sind (vgl. Fig. 12a).

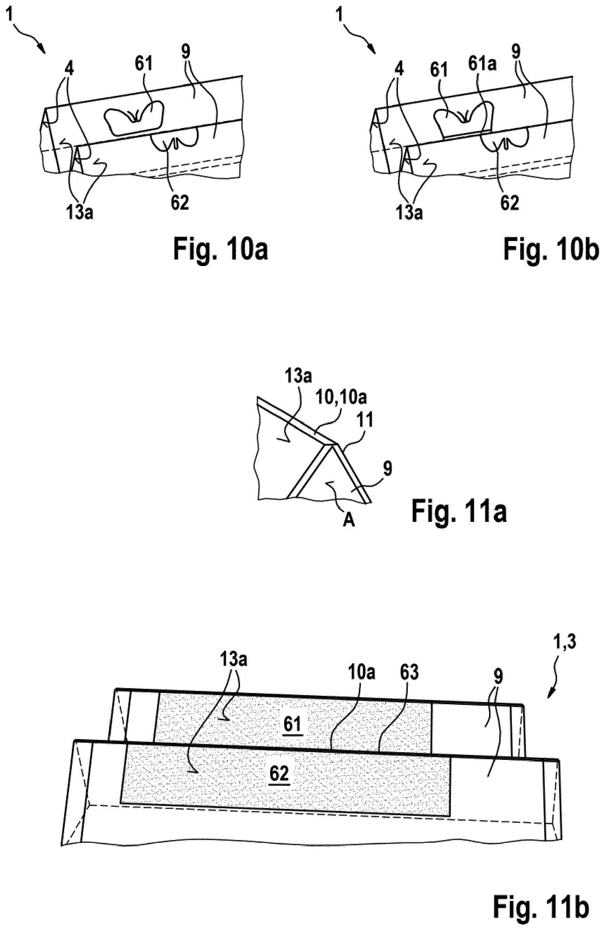

Alternativ oder zusätzlich wird dabei ein derartiger Überlapp von auf benachbarte Reflexionsflächen zukommenden Objektanteilen innerhalb der flächigen Pixelanordnung erzeugt, dass der Aufteilung entsprechende Anteile des virtuellen Objekts selbst bei schnellen vertikalen Verschiebungen des Kopfes des Benutzers weiterhin ohne Unterbrechungen ineinander übergehen (vgl. Fig. 10b). Schnell in diesem Sinne können beispielsweise Kopfbewegungen in vertikaler Richtung sein, denen ein (beispielsweise in einer Steuerungseinheit) implementierter Algorithmus zur Aufteilung des als virtuelles Anzeigebild darzustellenden Objekts auf mehrere Reflexionsflächen wegen interner Latenzzeiten, die z. B. für die Übertragung und Verarbeitung eines Eye-Tracking-Signals verbraucht werden, nicht so schnell folgen kann, dass keine bildfreien oder schwarzen Streifen zwischen den entsprechenden Anteilen des ins Blickfeld des Benutzers eingeblendeten Objekts entstehen.

Alternativ oder zusätzlich werden dabei zur Vermeidung eines sichtbaren Übergangs zwischen der Aufteilung entsprechenden Anteilen des virtuellen Anzeigebilds dessen in vertikaler Richtung kleinere Objekte (etwa kleine Symbole wie Buchstaben, Zahlen etc.) jeweils in einem Flächensegment der flächigen Pixelanordnung erzeugt, das einer einzelnen Reflexionsfläche zugeordnet ist, und/oder dessen in vertikaler Richtung größere Objekte (etwa Spurmarkierungen) mit einer horizontale Strukturen, z. B. Linien, aufweisenden Kaschiertextur ausgestattet (vgl. Fig. 12b).

insbesondere kann das Bereitstellen mindestens eines (Fahr-) Situationsparameters das Erfassen eines aktuellen Umfelds hinter der Projektionsscheibe, z. B. eines vorausliegenden Umfelds des Kraftfahrzeugs, und/oder einer aktuellen Benutzerposition, z. B. einer Augenposition oder einer Blickrichtung, umfassen. Geeignete Mittel, z. B. optische Kameras oder Radar/Lidar-Systeme, zur Erfassung des Umfelds bei dieser und anderen Verfahrensausgestaltungen sind dem Fachmann bekannt und an Bord des Kraftfahrzeugs oft ohnehin vorgesehen (vgl. Fig. 6).

Abhängig von dem erfassten aktuellen Umfeld und/oder der erfassten aktuellen Benutzerposition werden vorbestimmte statisch darzustellende Anzeigeinhalte in einem solchen Flächensegment der flächigen Pixelanordnung erzeugt, dass ein Hintergrund des entsprechenden virtuellen Anzeigebilds hinter der Projektionsscheibe vorbestimmten Anforderungen an die Dunkelheit genügt. So kann beispielsweise für Anzeigeinhalte, die eine Kombi-Instrumententafel in einem Kraftfahrzeug ersetzen, jeweils aktuell ein Sichtfeld (innerhalb der Frontscheibe) mit dunklem Hintergrund gewählt werden. Rein beispielhaft kann per Auswertung des Eye-Tracking (insbesondere einer Höhe der Augenposition) und des vorausliegenden Umfelds etwa mittels eines Umgebungsmodells (flache Stra-ße, Bergkuppe, Fahrt durch eine Unterführung etc.) durch einen geeigneten Algorithmus geometrisch ermittelt werden, welcher Bereich vor dem Kraftfahrzeug als geeigneter "dunkler" Hintergrund zur Verfügung steht. Daraus kann dynamisch ein entsprechender geeigneter Projektionsbereich (insbesondere dessen Höhe) in der Frontscheibe bzw. das zugehörige Flächensegment der flächigen Pixelanordnung ermittelt und zur Darstellung verwendet werden.

Statische, d. h. insbesondere von realen Hintergrundobjekten hinter der Projektionsscheibe unabhängig darzustellende, Anzeigeinhalte können bei dieser und anderen Verfahrensausgestaltungen z. B. sicherheitsrelevante Angaben sein, wie z. B. im Falle eines Kraftfahrzeugs Warnmeldungen bei einem kritischen Ladezustand eines Energiespeichers oder einem kritischen Füllzustand eines Kraftstofftanks an Bord oder einem aufkommenden Unwetter oder eine Anzeige einer aktuell vorliegenden Geschwindigkeitsbegrenzung oder deren Überschreiten etc.

Insbesondere kann das Bereitstellen mindestens eines (Fahr-) Situationsparameters das Erfassen eines aktuellen Hintergrunds für vorbestimmte kontaktanalog darzustellende virtuelle Objekte hinter der Projektionsscheibe und/oder einer aktuellen Benutzerposition, wie z. B. einer Augenposition oder einer Blickrichtung, umfassen. Abhängig von dem erfassten aktuellen Hintergrund und/oder der erfassten aktuellen Benutzerposition werden bei dieser Verfahrensausgestaltung die vorbestimmten kontaktanalog darzustellenden Objekte
- durch ein insbesondere dynamisches Anpassen ihrer Position innerhalb der flächigen Pixelanordnung einer Position des erfassten aktuellen Hintergrunds innerhalb der Projektionsscheibe und/oder der erfassten aktuelten Benutzerposition dynamisch nachgeführt; und/oder
- an eine Entfernung des erfassten aktuellen Hintergrunds angepasst durch ein insbesondere dynamisches Anpassen der Objektgrößen und/oder, bei einer 3D-Darstellung, der Abstände der Einzelbilder fürs linke und rechte Auge innerhalb der flächigen Pixelanordnung (vgl. Fig. 14);
- wobei jeweils insbesondere eine Helligkeit und/oder Farbe dieser Objekte an eine Helligkeit und/oder Farbe des erfassten aktuellen Hintergrunds insbesondere dynamisch angepasst werden kann, z. B. kann ein Markierungspfeil vor einer hellen Fassade deutlich heller oder, umgekehrt, dunkler dargestellt werden, als vor einem dunklen Wald, um eine Kontrastwirkung zu erhöhen.

Durch das genannte Nachführen der Position kontaktanaloger virtueller Objekte können beispielsweise Kraftfahrzeug- und/oder Benutzerkopfbewegungen dynamisch ausgeglichen werden. So kann z. B. ein eingeblendeter virtueller Abbiegepfeil einer sich nähernden Abzweigung derart nachgeführt werden, dass er stets genau in die richtige Ausfahrt zeigt.

Durch das Anpassen der Objektgrößen an die dynamisch variierende Hintergrundentfernung kann ein virtuelles 2D- oder 3D-Objekt als immer gleich groß für die Wahrnehmung des Benutzers erzeugt werden: Beispielsweise kann ein kontaktanalog eingeblendeter Pfeil derart im Fernen immer kleiner und in der Nähe immer größer dargestellt werden, dass er vom Benutzer als immer gleich groß interpretiert wird, z. B. 5 m groß.

Für die virtuelle 3D-Darstellung konnte in einem Test-Kraftfahrzeug mit einer hierin beschriebenen Blickfeldanzeigevorrichtung nachgewiesen werden, dass ein für jedes Auge des Benutzers separat über die Frontscheibe eingeblendetes 2D-Objektbild vom Gehirn als ein 3D-Objekt erkannt, übereinandergelegt und damit mit einer räumlichen Tiefe wahrgenommen wird, die dem Abstand der Einzelbilder entspricht: Innerhalb der flächigen Pixelanordnung eng beieinander dargestellte Einzelbilder ergeben ein nahes 3D-Objekt, etwas weiter beabstandete Einzelbilder ergeben ein etwas weiter in der Ferne liegendes 3D-Objekt, und weite Einzelbildabstände ergeben weit entfernte 3D-Objekte (vgl. Fig. 14).

Insbesondere kann in den Fällen, in denn die Blickfeldanzeigevorrichtung in einem Kraftfahrzeug montiert ist, der bereitgestellte mindestens eine Fahrsituationsparameter einen aktuellen Bewegungs- und/oder Steuerungszustand des Kraftfahrzeugs und/oder einen aktuellen Bordsystem- und/oder Insassenzustand, insbesondere eine Anzahl und Position der Insassen im Kraftfahrzeug, und/oder ein aktuell vorausliegendes Umfeld und/oder vorausliegende Streckendaten umfassen. Abhängig von diesem/diesen bereitgestellten Fahrsituationsparameter(n) werden in das Blickfeld des Fahrers und/oder weiterer Insassen über jeweils geeignete Flächensegmente der flächigen Pixelanordnung
- kontaktanaloge Anzeigeinhalte, insbesondere virtuelle Objektbilder und/oder -Markierungen, zur Unterstützung des Fahrers und/oder zur Verdeutlichung einer Fahrsituation für ihn und weitere Insassen beim assistierten oder hoch- oder vollautomatisierten Fahren (HAF/VAF) eingeblendet; und/oder
- vorbestimmte statische Anzeigeinhalte, insbesondere sicherheitsrelevante Angaben zum Bordsystemzustand und/oder zu Streckendaten, für den Fahrer und/oder weitere Insassen beim assistierten oder hoch- oder vollautomatisierten Fahren eingeblendet; und/oder
- Entertainment-Inhalte für einen oder mehrere Insassen eingeblendet, wobei beispielsweise entsprechende Flächensegmente der Frontscheibe zur Erzeugung eines Kinoerlebnisses in an sich bekannter Weise zwischen transparent und schwarz schaltbar ausgebildet sind;
- vorbestimmte, z. B. sicherheitsrelevante oder gesetzlich vorgeschriebene Angaben (etwa zum Bordsystemzustand und/oder zu Streckendaten) über zur Erzeugung zumindest teilweise p-polarisierten Lichts ausgebildete Flächensegmente der flächigen Pixelanordnung erzeugt werden, wobei entsprechende Flächensegmente der Frontscheibe zur Reflexion p-polarisierten Lichts ausgebildet sind.

Dabei können insbesondere über jeweils unterschiedliche Flächensegmente einer großflächigen Pixelanordnung und damit auch der Frontscheibe gleichzeitig jeweils eigene virtuelle Anzeigebilder z. B. für den Fahrer und den Beifahrer erzeugt werden. Durch eine echte kontaktanaloge Anzeige können beispielsweise zur Unterstützung der Navigation eine korrekte Spur oder Ausfahrt markiert werden oder beim autonomen Fahren zur Schaffung des Vertrauens bei den Insassen die Sicht und Absicht des Kraftfahrzeugs durch Objektmarkierungen visualisiert werden. Zu ähnlichen Zwecken können auch in 2D oder 3D hier und weiter oben erwähnte statische Anzeigeinhalte über nicht für kontaktanaloge Anzeigen genutzte und/oder aus Sicherheitsgründen besonders geeignete Flächensegmente der Frontscheibe eingeblendet werden.

Alternativ oder zusätzlich hierzu können über einen 3D- oder 2D-Bildschirm der flächigen Pixelanordnung Entertainment-Inhalte beispielsweise für Insassen eines parkenden Kraftfahrzeugs oder beim HAF/VAF-Regime in einem geeigneten Teilbereich der Projektionsfläche für den Beifahrer. Ein gegenüber herkömmlichen HUDs vergrößertes Field-of-View der vorliegenden Blickfeldanzeigevorrichtung kann dabei für ein erhöhtes Komfortgefühl für die Benutzer und erweiterte Einsatzmöglichkeiten genutzt werden, beispielsweise für ein Kinoerlebnis in 2D oder 3D für einen oder mehrere Insassen des Kraftfahrzeugs. Insbesondere kann dabei eine 3D-Entfernung (sog. Konvergenzentfernung) etwa dem Abstand der Augen von der flächigen Pixelanordnung (etwa 1,2 m bei typischen Fahrzeuggeometrien aus Sicht des Fahrers oder Beifahrers) entsprechen, was das Scharfstellen der Augen (sog. Akkommodationsentfernung) direkt auf die in 3D eingeblendete Anzeige ermöglicht.

Damit vorbestimmte, z. B. sicherheitsrelevante Angaben für den Benutzer auch mit in Bezug auf die Frontscheibenfläche senkrecht, d. h. p-polarisierender Sonnenbrille sichtbar sind, können sie über zumindest teilweise p-polarisierende Flächensegmente der flächigen Pixelanordnung und der Frontscheibe dargestellt werden. Hierzu kann die flächige Pixelanordnung zumindest in einem begrenzten Flächensegment zur Abstrahlung von Projektionslicht einer gemischten p- und s-Polarisation (in Bezug auf der Frontscheibe) ausgebildet sein und einen Filter enthalten, der nur p-Polarisation passieren läßt, und die Frontscheibe eine beispielsweise in bekannter Weise p-polarisiertes Licht reflektierende Schicht aufweisen, beispielsweise in einem ca. 20 cm breiten Streifen oberhalb der Scheibenwurzel. Damit kann auch ein durch Doppelreflexion an zwei verschiedenen Grenzflächen der Frontscheibe verursachtes Doppelbild überwunden werden.

Insbesondere kann das Bereitstellen mindestens eines (Fahr-) Situationsparameters das Erfassen einer aktuellen Benutzerposition, insbesondere einer Augenposition oder einer Blickrichtung, umfassen. Abhängig von der erfassten aktuellen Benutzerposition werden obere Kanten der mehreren zueinander parallelen Reflexionsflächen der reflexunterdrückenden Umlenkanordnung aus der Sicht des Benutzers im Wesentlichen auf eine zu seinen Augen führende Linie ausgerichtet, um z. B. die Reflexionsflächen gegen einen direkten Blick des Benutzers darauf zu verdecken (vgl. Fig. 1, 9b und 13a-b). Dies kann insbesondere mittels einer geeigneten Hub-/Kipp-Einrichtung, insbesondere einer stufenlos verstellbaren Gleitschiene, für die reflexunterdrückende Umlenkanordnung oder die flächige Pixelanordnung manuell oder zumindest teilweise automatisiert, beispielsweise durch das Eye-Tracking, einstellbar sein und/oder aber auch für eine Standardbenutzerposition ab Werk gewährleistet sein. Alternativ oder zusätzlich werden Flächensegmente der flächigen Pixelanordnung, deren Licht außerhalb der erfassten aktuellen Blickrichtungen oder resultierender Eyeboxen aller beteiligter Benutzer liegt, als störreflexfreie großflächige Innenraum-Beleuchtungsquelle genutzt.

Insbesondere kann mindestens eine der Reflexionsflächen der reflexunterdrückenden Umlenkanordnung durch eine Mantelflächenseite eines auf der flächigen Pixelanordnung angeordneten Prismas gebildet sein. (Das Prisma kann beispielsweise eine dreieckige, viereckige, insbesondere trapezförmige, oder fünfeckige Querschnittsfläche haben.) Dies kann der jeweiligen Reflexionsfläche insbesondere eine hohe mechanische Stabilität verleihen. Das Prisma kann aus jedem für das verwendete Projektionslicht transparenten Material gefertigt sein. Dabei kann das Bereitstellen mindestens eines (Fahr-) Situationsparameters beispielsweise das Erfassen einer aktuellen Blickrichtung des Benutzers umfassen und abhängig davon eine ebene Abfasung einer oder mehrerer oberer Prismenkanten im Wesentlichen entlang der erfassten Blickrichtung unter Berücksichtigung der Reflexion an der Projektionsscheibe ausgerichtet werden (vgl. Fig. 11a-12b). Auf diese Weise kann bei der Aufteilung eines darzustellenden Objekts auf mehrere Reflexionsflächen ein sichtbarer Übergang zwischen entsprechenden Anteilen des virtuellen Anzeigebilds in vertikaler Richtung vermieden werden.

Insbesondere kann für jeweils zwei benachbarte Reflexionsflächen der reflexunterdrückenden Umlenkanordnung eine Lichtaustrittsebene, die eine obere Kante der einen Reflexionsfläche und die untere Kante der Rückseite der nächsten Reflexionsfläche verbindet, im Betrieb der Blickfeldanzeigevorrichtung im Wesentlichen senkrecht zu der Projektionsscheibe ausgerichtet sein (vgl. Fig. 1). Dies kann insbesondere zu einer vollständigen Störreflexunterdrückung für Umgebungslicht aus beliebigen Richtungen führen.

Gemäß einem weiteren Aspekt ist eine Steuerungseinheit für eine Blickfeldanzeigevorrichtung vorgesehen, wobei die Steuerungseinheit zum zumindest teilweise automatisierten Durchführen eines Verfahrens der hierin dargelegten Art ausgebildet ist. Gemäß einem weiteren Aspekt ist ein Computerprogramm vorgesehen, welches, wenn es in einer Steuerungseinheit ausgeführt wird, dazu eingerichtet ist, ein Verfahren der hierin dargelegten Art auszuführen.

Gemäß einem weiteren Aspekt ist ein Kraftfahrzeug vorgesehen, umfassend:
- eine sich zwischen einer Frontscheibe des Kraftfahrzeugs und einer Instrumententafel erstreckende Oberseite der Instrumententafel;
- eine auf oder in der Oberseite der Instrumententafel angeordnete Blickfeldanzeigevorrichtung der hierin dargelegten Art zur Erzeugung eines in ein Blickfeld des Fahrers und/oder weiterer Insassen eingeblendeten virtuellen Anzeigebilds; und
- eine Steuerungseinheit der hierin dargelegten Art.

Dabei kann insbesondere die flächige Pixelanordnung oder die reflexunterdrückende Umlenkanordnung im Wesentlichen bündig zu der Oberseite der Instrumententafel angeordnet sein (vgl. Fig. 2a und 14).

### Kurzbeschreibung der Zeichnungen

Die obigen Aspekte der Erfindung und deren Ausführungsformen und spezifische Ausgestaltungen werden nachfolgend anhand der in den beigefügten Zeichnungen dargestellten Beispiele näher erläutert. Die Zeichnungen sind rein schematisch, sie sind insbesondere nicht als maßstabsgetreu zu lesen. Ähnliche oder einander entsprechende Elemente sind darin mit den gleichen Bezugszeichen versehen. Es zeigen:
- Figur 1: eine schematische seitliche Querschnittsansicht einer Blickfeldanzeigevorrichtung der hierin dargelegten Art;
- Figur 2a: eine perspektivische Ansicht einer möglichen Erstreckung einer Blickfeldanzeigevorrichtung der hierin dargelegten Art in einer Oberseite einer Instrumententafel eines Kraftfahrzeugs;
- Figuren 2b und 2d: jeweils eine perspektivische Ansicht eines mit der Blickfeldanzeigevorrichtung der Fig. 2a nutzbaren Projektionsbereichs in der Frontscheibe des Kraftfahrzeugs aus Fahrersicht;
- Figur 2c: eine perspektivische Ansicht eines mit der Blickfeldanzeigevorrichtung der Fig. 2a nutzbaren Projektionsbereichs in der Frontscheibe des Kraftfahrzeugs aus Beifahrersicht;
- Figuren 3a bis 3c: perspektivische Ansichten eines Modellbeispiels einer Blickfeldanzeigevorrichtung der hierin dargelegten Art zur Erläuterung der Umlenkwirkung von deren reflexunterdrückender Umlenkanordnung mit mehreren Prismen;
- Figuren 4a und 4b: perspektivische Ansichten eines weiteren Modellbeispiels einer Blickfeldanzeigevorrichtung der hierin dargelegten Art zur Erläuterung der Entstehung sichtbarer und unsichtbarer Streifen in einer die flächige Pixelanordnung enthaltenden Fläche;
- Figur 5a: eine perspektivische Ansicht einer möglichen Anordnung einer Blickfeldanzeigevorrichtung der hierin dargelegten Art in einer Oberseite einer Instrumententafel eines Kraftfahrzeugs;
- Figur 5b: eine perspektivische Ansicht eines mit der Blickfeldanzeigevorrichtung der Fig. 5a nutzbaren Projektionsbereichs in der Frontscheibe des Kraftfahrzeugs aus Fahrersicht mit einem kontaktanalog eingeblendeten virtuellen Abbiegepfeil;
- Figur 6: eine schematische seitliche Querschnittsansicht einer Blickfeldanzeigevorrichtung der hierin dargelegten Art mit Ansteuerungskomponenten für deren flächige Pixelanordnung zur Durchführung eines Verfahrens der hierin dargelegten Art;
- Figur 7: eine perspektivische Frontscheibenansicht aus Fahrersicht mit einer mit der Blickfeldanzeigevorrichtung der Fig. 6 kontaktanalog eingeblendeten virtuellen Markierung eines Fremdfahrzeugs;
- Figur 8: eine weitere perspektivische Frontscheibenansicht aus Fahrersicht mit einer mit der Blickfeldanzeigevorrichtung der Fig. 6 kontaktanalog eingeblendeten virtuellen Markierung einer Fahrspur und einem mittels einer zusätzlichen herkömmlichen Projektionseinheit statisch eingeblendeten weiteren virtuellen Anzeigeinhalt;
- Figuren 9a und 9b: schematische seitliche Querschnittsansichten weiterer Blickfeldanzeigevorrichtungen der hierin dargelegten Art;
- Figuren 10a und 10b: perspektivische Ansichten des Modellbeispiels gemäß Fig. 3a-3c zur Erläuterung eines vertikalen Überlapps bei der Aufteilung eines darzustellenden Objekts auf zwei Reflexionsflächen;
- Figuren 11a bis 11c: perspektivische Ansichten eines weiteren Modellbeispiels einer Blickfeldanzeigevorrichtung der hierin dargelegten Art zur Erläuterung einer Ausrichtung ebener Abfasung oberer Prismenkanten entlang der Blickrichtung des Benutzers;
- Figuren 12a und 12b: perspektivische Ansichten gemäß Fig. 11c mit jeweils anderen Beispielen eines darzustellenden Objekts;
- Figuren 13a und 13b: schematische seitliche Querschnittsansichten einer Blickfeldanzeigevorrichtung der hierin dargelegten Art zur Erläuterung der Ausrichtung oberer Kanten der Reflexionsflächen auf eine zu den Augen des Benutzers führende Linie mittels einer stufenlos verstellbaren Gleitschiene; und
- Figur 14: eine perspektivische Ansicht einer Blickfeldanzeigevorrichtung der hierin dargelegten Art in einer Oberseite einer Instrumententafel eines Kraftfahrzeugs mit drei vergrößerten Ausschnitten zur Erläuterung einer Anpassung der erzeugten 3D-Entfernung eines kontaktanalog eingeblendeten Markierungspfeils an eine erfasste Entfernung des jeweils zu markierenden Hintergrundobjekts.

### Beschreibung von Ausführungsformen

Alle weiter oben und nachfolgend in der Beschreibung und den Ansprüchen genannten spezifischen Details und Varianten des Betriebsverfahrens für eine Blickfeldanzeigevorrichtung gemäß dem ersten Aspekt der Erfindung, insbesondere verschiedene Ausgestaltungsmerkmale der betreffenden Blickfeldanzeigevorrichtung, können bei den in den Figuren 1 bis 14 gezeigten Beispielen implementiert sein. Umgekehrt sind die in Fig. 1 bis 14 gezeigten konkreten Beispiele nur als eine vereinfachte, beispielhafte Illustration der in der obigen Beschreibung und den Ansprüchen allgemeiner definierter Merkmale der Blickfeldanzeigevorrichtung und des Betriebsverfahrens der hierin dargelegten Art zu verstehen. Deren weiter oben angegebene Definitionen werden daher insbesondere nicht alle nochmals wiederholt.

Fig. 1 zeigt in einer stark vereinfachten schematischen vertikalen Querschnittsansicht eine Blickfeldanzeigevorrichtung 1 der hierin dargelegten Art in einem Kraftfahrzeug (in Fig. 1 nicht dargestellt, vgl. Fig. 2a-2d, 5a-5b und 14), insbesondere ein Head-up-Display (HUD).

Die Blickfeldanzeigevorrichtung 1 umfasst eine elektrisch ansteuerbare flächige Pixelanordnung 2, die im Betrieb ein Projektionslichtstrahlenbündel L mit einem gewünschten Anzeigeinhalt erzeugt. Ferner umfasst die Blickfeldanzeigevorrichtung 1 eine auf der flächigen Pixelanordnung 2 angeordnete reflexunterdrückende Umlenkanordnung 3, die in diesem Beispiel mehrere (rein beispielhaft fünf) sich entlang der flächigen Pixelanordnung 2 in einem vorbestimmten spitzen Winkel dazu und parallel zueinander erstreckende ebene Reflexionsflächen 4 aufweist. Durch das Umlenken des Projektionslichtstrahlenbündels L an den Reflexionsflächen 4 wird es auf eine Frontscheibe 5 des Kraftfahrzeugs projiziert und von dieser zu den Augen eines Benutzers 6, insbesondere des Fahrers oder Beifahrers, reflektiert (durch Pfeile angedeutet). Dadurch entsteht hinter der Frontscheibe 5 ein in ein Blickfeld des Benutzers 6 eingeblendetes virtuelles Anzeigebild (vgl. Fig. 5b, 7 und 8), das sich für den Benutzer 6 mit einem durch die Frontscheibe 5 beobachteten realen Umfeld vor dem Kraftfahrzeug überlagert. Der vorbestimmte spitze Anstellwinkel der Reflexionsflächen 4 kann hierzu anwendungsspezifisch beispielsweise aus der gegenseitigen geometrischen Anordnung der flächigen Pixelanordnung 2, der Frontscheibe 5 und des Benutzers 6 festgelegt sein. Dabei sind die Reflexionsflächen 4 auf deren Rückseiten 11 zu einer Störreflexunterdrückung vollflächig lichtabsorbierend ausgebildet.

Die Blickfeldanzeigevorrichtung 1 kann beispielsweise in oder auf einer Oberseite 7 einer Instrumententafel 8 (in Fig. 1 nicht dargestellt, vgl. Fig. 2a-2d, 5a und 14) des Kraftfahrzeugs zwischen der Frontscheibe 5 und der Instrumententafel 8 bzw. einem Lenkrad montiert sein. Dabei kann die flächige Pixelanordnung 2 oder die reflexunterdrückende Umlenkanordnung 3 zumindest abschnittweise beispielsweise im Wesentlichen bündig zu der Oberseite 7 der Instrumententafel 8 angeordnet sein, was besonders unauffällig, schützend für die optischen Bauteile oder den Benutzer 6 und/oder platzsparend sein kann.

In Fig. 1 sind rein beispielhaft alle Reflexionsflächen 4 der reflexunterdrückenden Umlenkanordnung 3 durch Mantelflächenseiten von auf der flächigen Pixelanordnung 2 aufliegenden Prismen 9 aus Glas oder Kunststoff gebildet. Dies kann einen besonders robusten Aufbau der Blickfeldanzeigevorrichtung 1 ergeben und sowohl die flächige Pixelanordnung 2 und die Reflexionsflächen 4 vor Beschädigungen als auch den Benutzer 6 vor Verletzungen an freistehenden Kanten schützen. Insbesondere können hierzu die freistehenden, oberen Prismenkanten 10 zusätzlich abgerundet oder abgefast (vgl. Fig. 11a) und insbesondere ebenfalls lichtabsorbierend ausgebildet sein, beispielsweise in ähnlicher Weise wie die Rückseiten der Reflexionsflächen und zu demselben Zweck.

Insbesondere hat das jeweilige Prisma 9 in Fig. 1 eine dreieckige Querschnittsfläche A, sodass dessen andere, untere Mantelflächenseite 9a auf der flächigen Pixelanordnung 2 aufliegt, während dessen dritte Mantelflächenseite als Lichtaustrittsfläche 13a für das umgelenkte Projektionslichtstrahlenbündel L dient. Die Lichtaustrittsflächen 13a können insbesondere von außen mit einer geeigneten Antireflex-Beschichtung versehen sein. In Fig. 1 schließen die auf der flächigen Pixelanordnung 2 aufliegenden Mantelflächenseiten 9a der Prismen 9 rein beispielhaft direkt aneinander an.

Bei der in Fig. 1 gezeigten geometrischen Anordnung der Reflexionsflächen 4 kann durch deren lichtabsorbierende Rückseiten 11 insbesondere eine nahezu vollständige Unterdrückung von Störreflexen des Umgebungslichts 12 aus beliebigen Richtungen von außerhalb und innerhalb des Kraftfahrzeugs erreicht werden, wie in Fig. 1 symbolisch durch einen störreflexfreien Bereich 6a um den Benutzer 6 herum angedeutet. Hierzu können beispielsweise Lichtaustrittsebenen 13, die für jeweils zwei benachbarte Reflexionsflächen 4 eine obere Kante der einen Reflexionsfläche und die untere Kante der Rückseite 11 der nächsten Reflexionsfläche verbinden und in denen in diesem Beispiel die Lichtaustrittsflächen 13a der Prismen 9 liegen, im Wesentlichen senkrecht zu der Frontscheibe 5 ausgerichtet sein. Insbesondere liegen in diesem Beispiel die Reflexionsflächen 4 und deren lichtabsorbierende Rückseiten 11 mit deren unteren Kanten unmittelbar auf der flächigen Pixelanordnung 2 auf, die bei Bedarf auch eine schützende Deckschicht etc. umfassen kann.

Ferner ist in Fig. 1 eine vordere, am nächsten an dem Benutzer 6 liegende Reflexionsfläche 4 zur Vorbeugung einer Blendung des Benutzers daran durch eine abgedunkelte oder lichtabsorbierende Abdeckfläche 14 in Blickrichtung des Benutzers 6 abgedeckt. Die Abdeckfläche 14 bedeckt in diesem Beispiel eine dem Benutzer 6 zugewandte Mantelflächenseite des vorderen Prismas 9. Für die Abdeckfläche 14 eignet sich insbesondere die gleiche Beschichtung, beispielsweise eine schwarze matte Beschichtung, wie bei den lichtabsorbierenden Rückseiten 11 der Reflexionsflächen 4. Alternativ kann zum selben Zweck auch eine separate, in Richtung des Benutzers vor der vorderen Reflexionsfläche 4 angeordnete Abdeckfläche vorgesehen sein, sodass die genannte Reflexionsfläche 4 zur Umlenkung des Projektionslichts nutzbar ist.

Des Weiteren liegen in Fig. 1 obere Kanten der Reflexionsflächen 4 rein beispielhaft im Wesentlichen auf einer Linie K aus der Sicht des Benutzers 6 der Blickfeldanzeigevorrichtung 1.

Fig. 2a zeigt schematisch eine perspektivische Ansicht einer möglichen Erstreckung einer Blickfeldanzeigevorrichtung 1 der hierin dargelegten Art, insbesondere gemäß Fig. 1, in einer Oberseite 7 einer Instrumententafel 8 eines Kraftfahrzeugs 15. Eine Gesamthöhe der Blickfeldanzeigevorrichtung 1 in einer zu der flächigen Pixelanordnung 2 senkrechten Richtung kann insbesondere nur wenige cm, beispielsweise zwischen 0,5 und 10 cm, insbesondere zwischen 1 und 7 cm, z. B. etwa 2, 3, 4, 5 oder 6 cm betragen. Aufgrund einer entsprechend geringen Einbautiefe der Blickfeldanzeigevorrichtung 1 kann sie grundsätzlich eine gesamte Fläche der Oberseite 7 der Instrumententafel 8 des Kraftfahrzeugs 15 vor der Frontscheibe 5 einnehmen, wie in Fig. 2a durch deren mögliche Kontur 1a angedeutet. Zum Vergleich ist in Fig. 2a eine Lichtaustrittsöffnung 16 und deren Rand 16a bei einer eingangs erwähnten herkömmlichen Projektionseinheit eines HUDs mit unterhalb der Oberseite 7 der Instrumententafel 8 untergebrachter Projektionsoptik (nicht gezeigt) angedeutet.

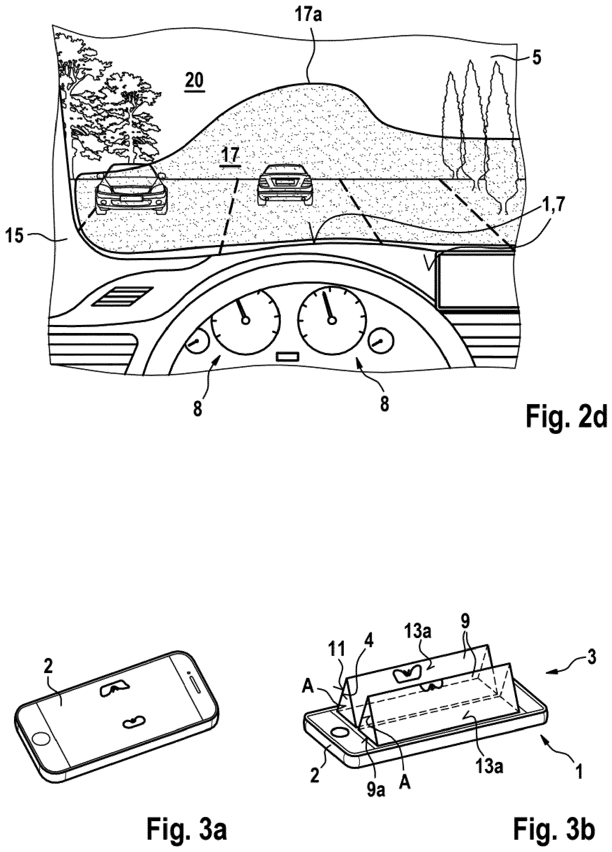

Fig. 2b und 2d zeigen jeweils schematisch eine perspektivische Ansicht eines mit der Blickfeldanzeigevorrichtung 1 der Fig. 2a nutzbaren Projektionsbereichs 17 der Frontscheibe 5 des Kraftfahrzeugs 15 aus Fahrersicht, dessen Begrenzung 17a der Kontur 1a der Blickfeldanzeigevorrichtung 1 entspricht. Wiederum sind zum Vergleich ein der Lichtaustrittsöffnung 16 einer herkömmlichen Projektionseinheit entsprechender Projektionsbereich 19 und dessen Begrenzung 19a angedeutet. Im Gegensatz dazu kann der mit der Blickfeldanzeigevorrichtung 1 nutzbare Projektionsbereich 17 nach oben erkennbar deutlich über den Horizont hinausreichen, und auch seitlich einen Großteil des vom Fahrer zu überblickenden Straßenbereichs vor der Frontscheibe 5 abdecken.

Fig. 2c zeigt schematisch eine perspektivische Ansicht eines mit der Blickfeldanzeigevorrichtung 1 der Fig. 2a nutzbaren Projektionsbereichs 18 der Frontscheibe 5 des Kraftfahrzeugs 15 aus Beifahrersicht, dessen Begrenzung 18a der Kontur 1a der Blickfeldanzeigevorrichtung 1 entspricht. Wie daraus leicht zu erkennen ist, sind die vorstehend für den Fahrer genannten Wirkungen der Blickfeldanzeigevorrichtung 1 genauso gut auch für den Beifahrer nutzbar. Ähnliches gilt entsprechend auch für weitere Insassen des Kraftfahrzeugs 15, beispielsweise aus Loungeposition im Fond. Insgesamt ist mit der Blickfeldanzeigevorrichtung 1 daher eine Multi-User-Nutzung möglich. Sofern die Inhalte je nur von einem User gesehen werden sollen, ist über die Auswertung eines Eye-Tracking für alle zu berücksichtigenden User die Pixelmatrix der flächigen Pixelanordnung 2 so anzusteuern, dass das Bild nur von dem betreffenden User gesehen werden kann.

Figuren 3a bis 3c zeigen, jeweils in perspektivischer Ansicht, ein stark vereinfachtes Modellbeispiel für eine Blickfeldanzeigevorrichtung 1 der hierin dargelegten Art (beispielsweise gemäß der Fig. 1) zur Erläuterung der Umlenkwirkung von deren reflexunterdrückender Umlenkanordnung 3, deren Reflexionsflächen 4 in diesem Modell durch vom Betrachter oder Benutzer abgewandte hintere Mantelflächenseiten zweier Prismen 9 mit dreieckigen Querschnittsflächen A gebildet sind.

Die flächige Pixelanordnung 2 ist in diesem Modellbeispiel als ein Flachbildschirm ausgebildet, der einen gewünschten Anzeigeinhalt, in diesem Beispiel das in Fig. 3a gezeigte zweidimensionale Bild eines Schmetterlings, erzeugt, welches von dem vom Flachbildschirm ausgehenden Projektionslichtstrahlenbündel L (vgl. Fig. 1) transportiert wird. Beim Passieren der auf der flächigen Pixelanordnung 2 angeordneten reflexunterdrückenden Umlenkanordnung 3 wird das Projektionslichtstrahlenbündel L an den Reflexionsflächen 4 der hinteren Mantelflächenseiten der Prismen 9 umgelenkt, um beispielsweise wie in fig. 1 auf die Frontscheibe 5 des Kraftfahrzeugs und von dieser reflektiert zu den Augen des Benutzers 6 zu gelangen.

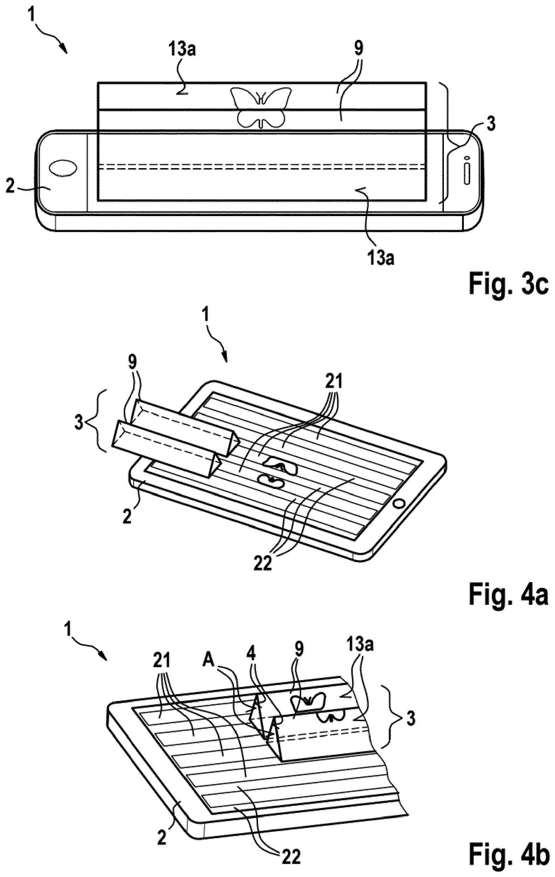

Wie in Fig. 3b zu sehen ist, tritt das durch die unteren Mantelflächenseiten 9a der Prismen 9 eingekoppelte Projektionslichtstrahlenbündel L aus deren Lichtaustrittsflächen 13a aus, während die Rückseiten 11 der Reflexionsflächen 4 zur Störreflexunterdrückung für das Umgebungslicht lichtabsorbierend ausgebildet sind. Wie Fig. 3c zeigt, verlässt das in die reflexunterdrückende Umlenkanordnung 3 eingekoppelte Projektionslichtstrahlenbündel L die Lichtaustrittsflächen 13a der Prismen 9 im Wesentlichen ohne Helligkeitsverlust und bei einer geeigneten Ansteuerung der flächigen Pixelanordnung 2 wie in Fig. 3a auch ohne Formverlust.

Fig. 4a und 4b zeigen jeweils in perspektivischer Ansicht ein weiteres stark vereinfachtes Modellbeispiel einer Blickfeldanzeigevorrichtung 1 der hierin dargelegten Art (beispielsweise gemäß der Fig. 1) zur Erläuterung der Entstehung sichtbarer und unsichtbarer Streifen in einer die flächige Pixelanordnung 2 enthaltenden Fläche. Ähnlich wie in Fig. 3a-3c ist auch hier die flächige Pixelanordnung 2 als ein Flachbildschirm ausgebildet, der einen gewünschten Anzeigeinhalt, in diesem Beispiel das in Fig. 4a gezeigte zweidimensionale Bild eines Schmetterlings, erzeugt. Auch die auf der flächigen Pixelanordnung 2 angeordnete reflexunterdrückende Umlenkanordnung 3 ist in diesem Modellbeispiel analog zu Fig. 3b-3c durch auf dem Flachbildschirm aufliegende, mit ihren langen Seiten aneinander anschließende Prismen 9 gebildet, von denen auch hier einfachheitshalber nur zwei von möglichen mehr als zwei Prismen gezeigt sind.

Wie in Fig. 4a und 4b extra angedeutet, erstrecken sich in der Pixelfläche zu den Reflexionsflächen 4 der Prismen 9 parallele Streifen 21, die durch die Umlenkung des Projektionslichts an den Reflexionsflächen 4 von hier bis zu fünf identischen Prismen 9 sichtbar für den Benutzer der Blickfeldanzeigevorrichtung 1 gemacht werden können. Dazwischen liegen für den Benutzer der Blickfeldanzeigevorrichtung 1 unsichtbare Streifen 22.

Die unsichtbaren Streifen 22 können daher in der Pixelanordnung schwarz gelassen werden oder aber für anderweitige Funktionen genutzt werden, beispielsweise als Luftauslass für eine Frontscheibenheizung oder Innenraumbelüftung, als Öffnung für eine Soundquelle, als Lichtquelle diffuser Innenraumbeleuchtung oder als Überlappbereich beim Schachteln oder Stufen benachbarter Teilflächen einer zusammengesetzten flächigen Pixelanordnung.

Insbesondere kann hierzu beispielsweise in Fig. 1 eine erste, am weitesten vom Benutzer 6 entfernte Reflexionsfläche 4 auch ohne ein Prisma direkt unter eine Scheibenwurzel der Frontscheibe 5 des Kraftfahrzeugs gesetzt und damit anders als bei freistehenden Reflexionsflächen sowohl mechanisch als auch gegen mögliche Benutzerverletzungen geschützt sein. Alternativ zum Weglassen eines Prismas 9 können bei dieser und/oder anderen Reflexionsflächen 4 (und nicht nur in diesem Beispiel) Prismenkanten, die den jeweiligen Reflexionsflächen 4 gegenüberliegen, in einem den unsichtbaren Streifen 22 entsprechenden Bereich, der nicht vom Projektionslichtstrahlenbündel L passiert wird, abgeschnitten werden und so eine vier- oder fünfeckige Querschnittsfläche A ergeben. Dadurch können beispielsweise die unsichtbaren Streifen 22 wie erwähnt anderweitig genutzt werden und/oder das Gewicht und der Materialverbrauch der reflexunterdrückenden Umlenkanordnung reduziert werden.

Fig. 5a zeigt eine perspektivische Ansicht einer möglichen Anordnung einer Blickfeldanzeigevorrichtung 1 der hierin dargelegten Art (beispielsweise gemäß der Fig. 1) in einer Oberseite 7 einer Instrumententafel 8 eines Kraftfahrzeugs 15. Aufgrund von deren flachem Aufbau kann sich die Blickfeldanzeigevorrichtung 1 entlang der Oberseite 7 der Instrumententafel 8 deutlich über den in Fig. 5a zum Vergleich angedeuteten Rand 16a einer Lichtaustrittsöffnung 16 einer Projektionseinheit der eingangs beschriebenen herkömmlichen HUD-Bauart hinaus erstrecken. Wie für Fig. 2a weiter oben beschrieben, kann die Blickfeldanzeigevorrichtung 1 bis hin zu der Gesamtfläche der Oberseite 7 der Instrumententafel 8 einnehmen.

In Fig. 5a nimmt eine flächige Pixelanordnung 2 der Blickfeldanzeigevorrichtung 1 eine Teilfläche der Oberseite 7 der Instrumententafel 8 des Kraftfahrzeugs 15 vor der Frontscheibe 5 ein, die rein beispielhaft durch eine viereckige Kontur 1a begrenzt ist. Die flächige Pixelanordnung 2 kann insbesondere als ein oder mehrere nebeneinander eben oder verschachtelt oder gestuft angeordnete 2D- oder 3D-Flachbildschirme ausgebildet sein. In Richtung der Frontscheibe 5 ist die flächige Pixelanordnung 2 von einer reflexunterdrückenden Umlenkanordnung 3 überdeckt, deren mehrere zueinander parallele Reflexionsflächen 4 bzw. deren lichtabsorbierende Rückseiten 11 durch parallele Striche angedeutet sind.

Fig. 5b zeigt den mit der Blickfeldanzeigevorrichtung 1 der Fig. 5a nutzbaren Projektionsbereich 17 in der Frontscheibe 5, dessen Begrenzung 17a der Kontur 1a der Blickfeldanzeigevorrichtung 1 entspricht. Der Projektionsbereich 17 reicht nach oben erkennbar deutlich über den Horizont hinaus und deckt auch seitlich mehrere Spuren des vom Fahrer zu überblickenden Straßenbereichs vor dem Kraftfahrzeug 15 ab. Aufgrund des entsprechend großen Raumwinkels oder Field-of-View der Blickfeldanzeigevorrichtung 1 eignet sie sich insbesondere sehr gut für kontaktanaloges Einblenden von virtuellen Hilfsinhalten in das Blickfeld des Fahrers abhängig von dem realen Umfeld 20 vor dem Kraftfahrzeug 15. Insbesondere ist mit der Blickfeldanzeigevorrichtung 1 ein echt kontaktanaloger 3D-Effekt (Stereo Augmented Reality) möglich:

Fig. 6 zeigt eine schematische seitliche Querschnittsansicht einer Blickfeldanzeigevorrichtung 1 gemäß der Fig. 1 und Fig. 2a oder 5a, deren autostereoskopische flächige Pixelanordnung 2 beispielswiese ein lichtstarkes Display 2a, z. B. einen Flüssigkristallbildschirm oder ein beliebiges anderes, etwa auch beim herkömmlichem HUD einsetzbares Standard-Display, sowie ein darauf aufgebrachtes Mikrolinsenarray 2b oder andersartige Ablenkmittel gemäß DE 10 2009 054 232 A1, die Lichtstrahlen unterschiedlicher Leuchtpunkte des Displays 2a in unterschiedliche Abstrahlrichtungen ablenken, aufweist.

Zur Ansteuerung der flächigen Pixelanordnung 2 zur Erzeugung eines kontaktanalogen 3D-Effekts beim Benutzer 6 ist ferner in an sich bekannter Weise eine Steuerungseinheit 24 für das Display 2a und das Mikrolinsenarray 2b vorgesehen. Die Steuerungseinheit 24 kann beispielsweise von einer Bilderzeugungseinheit 23 einen als virtuelles Anzeigebild darzustellenden Anzeigeinhalt erhalten. Dabei kann die Bilderzeugungseinheit 23 insbesondere zur Berechnung einer geeigneten stereoskopischen Darstellung darzustellender Umfeldobjekte für den Benutzer 6 ausgebildet sein und hierzu beispielsweise von einer Umfelderfassungseinheit 26 Daten über ein aktuell vorausliegendes Umfeld 20 des Kraftfahrzeugs 15 und/oder von einer Eye-Tracking-Einheit 25, die z. B. eine oder mehr Kameras umfassen kann, eine aktuelle Augenposition des Benutzers 6 erhalten. Die jeweiligen Signalleitungen sind in Fig. 6 durch Pfeile angedeutet.

Die Steuerungseinheit 24 ist in Kooperation mit der Bilderzeugungseinheit 23 zum Durchführen des Verfahrens der hierin dargelegten Art in allen seinen hierin dargelegten Ausgestaltungen ausgebildet. Die hierzu erforderlichen (Fahr-) Situationsparameter werden in diesem Beispiel von der Umfelderfassungseinheit 26, der Eye-Tracking-Einheit 25 und weiteren an sich bekannten geeigneten Sensoren und Systemen an Bord des Kraftfahrzeugs 15 bereitgestellt.

Fig. 10a-10b zeigen perspektivische Ansichten eines Modellbeispiels einer Blickfeldanzeigevorrichtung 1 der hierin dargelegten Art gemäß Fig. 3a-4b mit rein beispielhaft nur zwei Reflexionsflächen 4, die wiederum rein beispielhaft durch Mantelflächenseiten von Prismen 9 gebildet sind. Fig. 10b visualisiert die weiter oben beschriebene Verfahrensausgestaltung, bei der ein (zur Verdeutlichung durch einen Kasten umrandeter) Überlapp 61a von auf benachbarte Reflexionsflächen 4 zukommenden Objektanteilen 61 und 62 innerhalb der flächigen Pixelanordnung 2 (vgl. Fig. 3a-3b, in Fig. 10a-10b verdeckt) erzeugt wird, damit der Aufteilung entsprechende Anteile des virtuellen Objekts (hier ein Schmetterling) selbst bei schnellen, d. h. algorithmisch nicht mehr auszugleichenden, vertikalen Verschiebungen des Kopfes des Benutzers weiterhin ohne Unterbrechungen ineinander übergehen. Fig. 10a zeigt zum Vergleich den für in diesem Sinne normal langsame oder fehlende Kopfbewegungen ausreichenden Objektanteil 61 ohne Überlapp mit Objektanteil 62, was für solche Fälle ein virtuelles Anzeigebild des Schmetterlings ohne Unterbrechungen (vgl. Fig. 3c) ergibt.

Fig. 11a-11c zeigen perspektivische Ansichten eines weiteren Modellbeispiels einer Blickfeldanzeigevorrichtung 1 der hierin dargelegten Art, das sich von Fig. 3a-4b nur durch die in Fig. 11a näher dargestellte ebene, insbesondere waagerechte, Abfasung 10a der oberen Prismenkanten 10 der Prismen 9 unterscheidet (vgl. Fig. 1). Fig. 11b-11c visualisieren die weiter oben beschriebene Verfahrensausgestaltung, bei der die ebene Abfasung 10a der oberen Prismenkanten 10 unter Berücksichtigung der Reflexion an der Frontscheibe 5 (hier einfachheitshalber nicht gezeigt) entlang einer erfassten Blickrichtung des Benutzers ausgerichtet wird. In Fig. 11b (vor der Ausrichtung) ist zwischen auf benachbarte Reflexionsflächen 4 zukommenden Anteilen 61 und 62 eines Objekts (hier in Form einer durchgehenden einfarbigen Fläche) ein durch die Prismenkante 10 bedingter Übergangsstreifen 63 sichtbar, der in Fig. 11c (nach der Ausrichtung) nicht mehr in Erscheinung tritt.

Fig. 12a-12b zeigen perspektivische Ansichten gemäß Fig. 11c mit jeweils anderen Beispielen eines darzustellenden Objekts, das wie in Fig. 11c durch das beschriebene Ausrichten jeweils ohne ein Übergangsstreifen 63 (Fig. 11b) zwischen Objektanteilen 61 und 62 für den Benutzer zu sehen ist. Fig. 12a zeigt ein Objekt aus verschiedenfarbigen vertikalen Streifen 71-74 aus einem seitlich leicht verschobenen Blickwinkel. Durch diese seitliche Blickverschiebung ist in Fig. 12a eine Parallaxe der vertikalen Streifen 71-74 bei den Objektanteilen 61 und 62 erkennbar, die wiederum durch einen geeigneten Algorithmus der weiter oben genannten Art, d. h. durch einen entgegengesetzten seitlichen Versatz der auf benachbarte Reflexionsflächen 4 zukommenden Objektanteile 61 und 62 innerhalb der flächigen Pixelanordnung 2, beseitigt werden kann. Fig. 12b zeigt ein Beispiel einer ebenfalls weiter oben erwähnten Kaschiertextur 75 mit horizontalen Strukturen 76, hier Linien oder Strängen eines Geflechts, für ein auf benachbarte Reflexionsflächen 4 aufgeteiltes Objekt, wodurch ein in Fig. 11b sichtbarer Übergangsstreifen 63 selbst bei fehlender Ausrichtung oberen Prismenkanten 10a in Fig. 12b unsichtbar wäre.

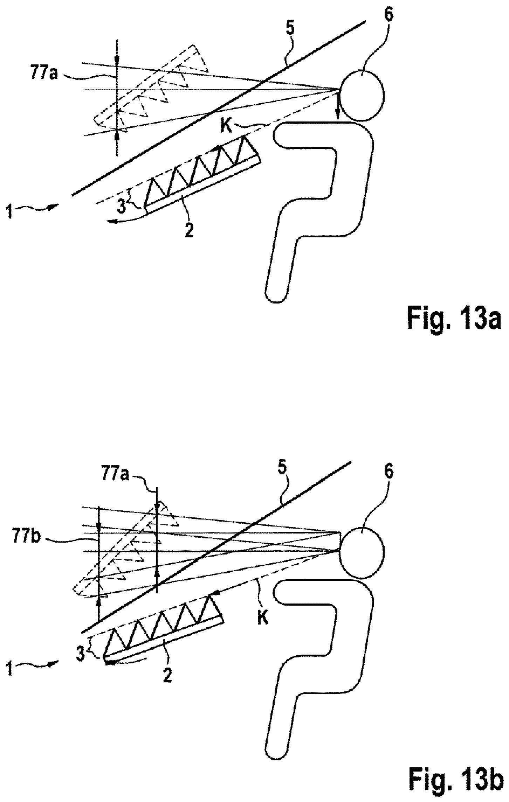

Fig. 13a-13b zeigen schematische seitliche Querschnittsansichten einer Blickfeldanzeigevorrichtung 1 der hierin dargelegten Art, insbesondere gemäß Fig. 1 oder 6, zur Erläuterung der Ausrichtung oberer Kanten 4a der Reflexionsflächen 4 auf eine zu den Augen des Benutzers 6 führende Linie K mittels einer stufenlos verstellbaren Gleitschiene (nicht dargestellt). Dadurch ist z. B. ein weitgehend identisches Sichtfeld 77a bzw. 77b durch die Blickfeldanzeigevorrichtung 1 für unterschiedlich hohe Augenpositionen eines Benutzers 6 einstellbar. So kann beispielsweise die in Fig. 13a für einen großen Benutzer 6 gezeigte Kantenausrichtung auf Linie K bei einem Wechsel zu einem kleineren Benutzer 6, wie in Fig. 13a durch einen Pfeil zur Senkung der Augenposition angedeutet, durch ein Verschieben der Blickfeldanzeigevorrichtung 1 zur Frontscheibe 5 hin und ein Kippen um eine hierzu senkrechte waagerechte Achse angepasst werden, wie wiederum durch Pfeile angedeutet. Fig. 13b zeigt die so angepasste Position der Blickfeldanzeigevorrichtung 1 für den kleineren Benutzer 6. Gestrichelt ist in Fig. 13a-13b jeweils eine rein gedankliche Spiegelbildposition der Blickfeldanzeigevorrichtung 1 bezüglich der Frontscheibe 5 für den Leser eingezeichnet, um die mittels der Gleitschiene bewirkte Verstellung des Raumwinkels des virtuellen Anzeigebilds (nicht gezeigt) zu veranschaulichen.

Fig. 14 zeigt eine perspektivische Ansicht einer Blickfeldanzeigevorrichtung 1 der hierin dargelegten Art, insbesondere gemäß Fig. 1 oder 6, die beispielsweise gemäß Fig. 2a in einer Oberseite 7 einer Instrumententafel 8 eines Kraftfahrzeugs 15 angeordnet ist. In Fig. 14 ist zur vereinfachten Darstellung die auf der flächigen Pixelanordnung 2 aufgebrachte reflexunterdrückende Umlenkanordnung 3 nicht näher dargestellt. Der untere Teil der Fig. 14 zeigt drei verschiedene Beispiele eines vergrößerten Ausschnitts der flächigen Pixelanordnung 2, in dem eine 3D-Darstellung eines kontaktanalog eingeblendeten Markierungspfeils 32 für jeweils verschiedene erfasste Entfernungen des zu markierenden Hintergrundobjekts erzeugt wird. Gemäß der weiter oben beschriebenen Verfahrensausgestaltung wird die erzeugte 3D-Entfernung des Markierungspfeils 32 durch jeweils unterschiedliche Abstände der Einzelbilder 32a und 32b fürs linke Auge 66a und fürs rechte Auge 66b des Benutzers innerhalb der flächigen Pixelanordnung 2 angepasst. Wie von rechts nach links in Fig. 14 gezeigt, ergeben innerhalb der flächigen Pixelanordnung 2 eng beieinander dargestellte Einzelbilder 32a und 32b ein nahes 3D-Objekt (Markierungspfeil 32 an einer Laterne 33), etwas weiter beabstandete Einzelbilder 32a und 32b ergeben ein etwas weiter in der Ferne liegendes 3D-Objekt (Markierungspfeil 32 an einem Zielgebäude 34), und noch weiter beabstandete Einzelbilder 32a und 32b ergeben ein noch weiter entferntes 3D-Objekt (Markierungspfeil 32 an einer Abbiegung 35).

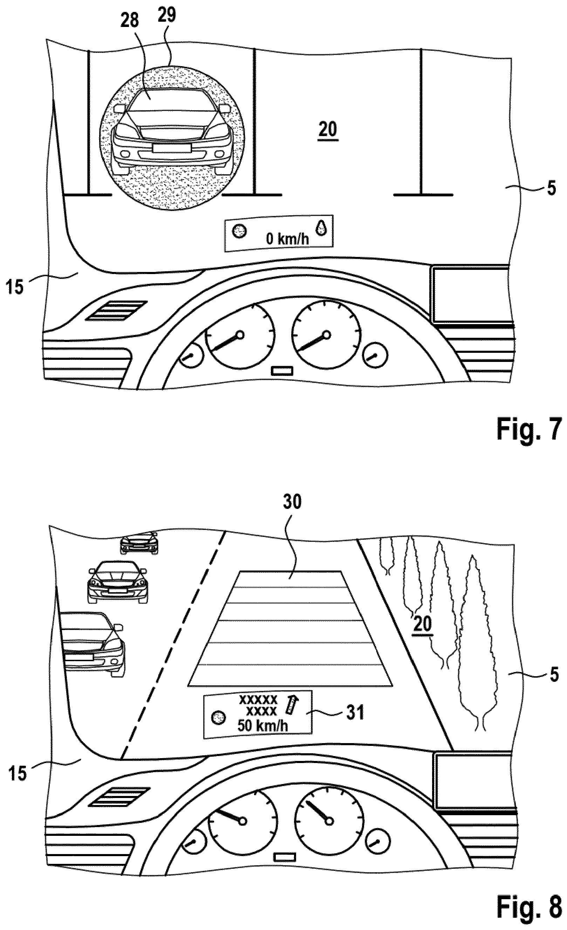

Mit Bezug auf Fig. 5b, 7 und 8 werden Weiterbildungen des Verfahrens der hierin dargelegten Art zum Betreiben einer Blickfeldanzeigevorrichtung 1 gemäß Fig. 6 beschrieben. (Dabei weisen die in Fig. 7 und 8 als virtuelle Anzeigebilder eingeblendeten Inhalte 29, 30 und 31 keine Randlinien auf, vielmehr dienen die angedeuteten Randlinien nur einer Verdeutlichung für den Leser.)

Bei einer Variante des Verfahrens wird von der Umfelderfassungseinheit 26 ein aktuell hinter der Frontscheibe 5 vorausliegendes Umfeld 20 des Kraftfahrzeugs 15 erfasst. Abhängig von dem erfassten Umfeld 20 werden in das Blickfeld des Benutzers 6, insbesondere des Fahrers des Kraftfahrzeugs 15, kontaktanalog Informationen wie virtuelle Objektbilder und/oder Objektmarkierungen zur Unterstützung des Benutzers 6 bei der Navigation beim selbständigen oder assistierten Fahren oder zur Visualisierung/Verdeutlichung einer vom Kraftfahrzeug 15 erfassten Fahrsituation und seiner Fahrabsicht beim hoch- oder vollautomatisierten Fahren (HAF/VAF) eingeblendet. So wird in Fig. 5b in kontaktanaloger Weise ein virtueller Abbiegepfeil 27 in die richtige Abbiegestelle der vorausliegenden Straße eingeblendet, in Fig. 7a ein auf einem Parkplatz bei Dunkelheit erfasstes Fremdfahrzeug 28 vor dem eigenen Kraftfahrzeug 15 mit einem farbigen, beispielswiese roten Kreis 29 deutlich sichtbar virtuell markiert, und in Fig. 8 auf einer Straße ohne Spurmarkierungen eine korrekte Spur vor dem eigenen Kraftfahrzeug 15 durch eine durchgehende farbige, beispielswiese gelbe, virtuelle Spurmarkierung 30 in Form der gesamten zu befahrenden Spur visualisiert.

Anhand der Fig. 8 wird eine weitere, mit der vorstehenden kombinierbare Variante des Verfahrens beschrieben. Hier umfasst die Blickfeldanzeigevorrichtung 1 gemäß einem sogenannten "Hybridansatz" neben der flächigen Pixelanordnung 2 und der reflexunterdrückenden Umlenkanordnung 3 ferner eine herkömmliche Projektionseinheit der eingangs genannten Art (nicht gezeigt) zum Erzeugen eines in ein Blickfeld eines Benutzers 6 eingeblendeten weiteren virtuellen Anzeigebilds 31.

Bei diesem Hybridansatz kann die flächige Pixelanordnung 2 mit der darauf angeordneten reflexunterdrückenden Umlenkanordnung 3 in der Oberseite 7 der Instrumententafel 8 des Kraftfahrzeugs 15 beispielswiese wie in Fig. 5a angedeutet neben der Lichtaustrittsöffnung 16 der Projektionseinheit, insbesondere unmittelbar an diese anschließend oder um diese herum, angeordnet sein. Insbesondere kann aber die Lichtaustrittsöffnung 16 der Projektionseinheit - anders als in Fig. 5a für deren herkömmliche Lage gezeigt - näher an der Scheibenwurzel der Frontscheibe 5 und angrenzend an die in Fig. 5a untere Konturseite der flächigen Pixelanordnung 2 angeordnet sein und in horizontaler Richtung länglicher als in Fig. 5a ausgebildet sein, um so zur Anzeige des weiteren virtuellen Anzeigebilds 31 tiefer unter dem Horizont, beispielsweise unmittelbar unter dem von der flächigen Pixelanordnung 2 erzeugten kontaktanalogen virtuellen Anzeigebild genutzt zu werden.

Diese herkömmliche Projektionseinheit umfasst dabei in ihrem Inneren sowohl eine Bildgebungseinheit zum Erzeugen eines weiteren Projektionslichtstrahlenbündels mit dem Anzeigeinhalt des weiteren virtuellen Anzeigebilds 31 als auch eine gegenüber der Bildgebungseinheit angeordnete Projektionsoptik zum Projizieren des erzeugten weiteren Projektionslichtstrahlenbündels auf eine Teilfläche der Frontscheibe 5. Dadurch können die herkömmliche HUD-Technologie mit der obigen kombiniert werden, um je nach Situation gleichzeitig oder abwechselnd genutzt zu werden.

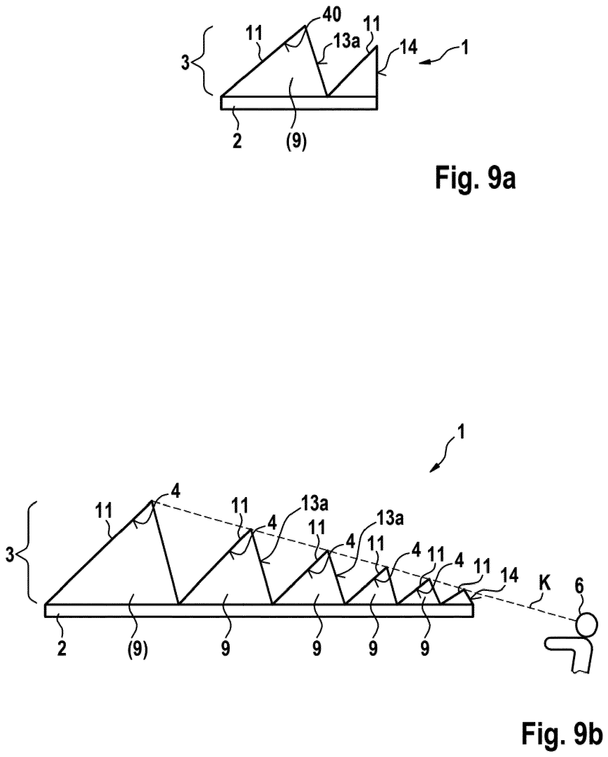

Fig. 9a-9b zeigen jeweils in einer schematischen vertikalen Querschnittsansicht weitere spezifische Ausgestaltungen der Blickfeldanzeigevorrichtung 1 der hierin dargelegten Art. Die reflexunterdrückende Umlenkanordnung 3 der Fig. 9a-9b unterscheidet sich von derjenigen der Fig. 1 und 6 dadurch, dass sie nur eine einzige große Reflexionsfläche 40 (Fig. 9a) oder mehrere Reflexionsflächen 4 mit untereinander variierenden Höhen senkrecht zur flächigen Pixelanordnung 2 (Fig. 9b) aufweist.

Mit der in Fig. 9a gezeigten Blickfeldanzeigevorrichtung 1 mit einer einzigen großen, beispielsweise etwa 6 cm (in Richtung senkrecht zur flächigen Pixelanordnung 2) hohen Reflexionsfläche 40 kann bereits ein Field-of-View erzielt werden, das in vertikaler Richtung vergleichbar zu dem eingangs erwähnten herkömmlichen HUD in heutigen Kraftfahrzeugen ist. Gleichzeitig kann aber die Blickfeldanzeigevorrichtung 1 der Fig. 9a aufgrund von deren flachem Aufbau deutlich breiter als das herkömmliche HUD in horizontaler Richtung ausgebildet sein, was insgesamt ein entsprechend deutlich größeres Field-of-View ergeben kann. Dabei ist es möglich, jedoch nicht zwingend erforderlich, dass die Reflexionsfläche 40 durch eine Mantelflächenseite eines Prismas 9 gebildet ist. Stattdessen kann es sich bei der Reflexionsfläche 40 auch einfach um einen geneigten Spiegel mit einer zu dessen Stabilität und der Verletzungsfreiheit eines Benutzers erforderlichen Dicke handeln, weil diese Dicke keinen Einfluss auf das erzeugte virtuelle Anzeigebild hat. Das gilt genauso für die jeweils am nächsten an die Frontscheibe 5 angeordnete Reflexionsfläche 4 in den Fig. 1 und 6. Wie auch in Fig. 1 und 6, ist in Fig. 9a gegenüber der Reflexionsfläche 40 zur Störreflexunterdrückung eine Attrappe mit einer dem Benutzer 6 zugewandten lichtabsorbierenden Abdeckfläche 14 und einer zur Reflexionsfläche 40 parallelen lichtabsorbierenden Rückseite 11 angeordnet.

In Fig. 9b kann für die erste von links Reflexionsfläche 4, die beispielsweise in einem Kraftfahrzeug am nächsten an dessen Frontscheibe 5 angeordnet ist, das Gleiche wie für die Reflexionsfläche 40 der Fig. 9a gelten. Durch weitere, in deren Höhe jeweils sukzessive reduzierte und wie in Fig. 9b gezeigt durch entsprechend unterschiedlich hohe Prismen 9 gebildete Reflexionsflächen 4 ist ein gegenüber Fig. 9a noch größeres Field-of-View der Blickfeldanzeigevorrichtung 1 erreichbar.

Durch die in Fig. 9a und 9b sukzessive abnehmenden Höhen der Reflexionsflächen 40, 4 bzw. deren Rückseiten 11 können deren obere Kanten auf eine zu den Augen des Benutzers 6 führende Linie K auch bei beispielsweise gegenüber Fig. 1 stärker zur Frontscheibe 5 geneigtem Abschnitt der Oberseite 7 der Instrumententafel 7 des Kraftfahrzeugs ausgerichtet sein.

Beim Verfahren der hierin dargelegten Art, insbesondere bei in den Fig. 1 bis 14 gezeigten Blickfeldanzeigevorrichtungen, kann mit einer flächigen Pixelanordnung 2, die neben oder statt eines autostereoskopischen mindestens einen 2D-Bildschirm aufweist, ein virtuelles Anzeigebild in einer feststehenden Entfernung von etwas unter oder über einem Meter, bei typischen Kraftfahrzeugabmessungen etwa 1,2 m, vom Benutzer 6 erzeugt werden. Ohne dass ein Eye-Tracking ausgewertet werden muss, können in diesem Bereich z. B. als Ersatz für eine herkömmliche Kombi-Instrumentenanzeige Informationen beispielsweise zum Fahrzeugzustand permanent angezeigt werden. Es können dadurch aber grundsätzlich auch alle anderen Arten von Informationen, insbesondere kontaktanaloge Einblendungen in das erfasste Umfeld hinter der Projektionsscheibe, angezeigt werden, die hierin in Bezug auf eine 3D-Darstellung erwähnt wurden.

### Bezugszeichenliste

- 1: Blickfeldanzeigevorrichtung
- 1a: Kontur der Blickfeldanzeigevorrichtung in einer Oberseite einer Instrumententafel
- 2: flächige Pixelanordnung
- 2a: Display
- 2b: Mikrolinsenarray
- 3: reflexunterdrückende Umlenkanordnung
- 4, 40: zueinander parallele, geneigte Reflexionsflächen der reflexunterdrückenden Umlenkanordnung
- 5: Frontscheibe
- 6: Benutzer der Blickfeldanzeigevorrichtung
- 66a, 66b: linkes, rechtes Auge des Benutzers
- 7: Oberseite der Instrumententafel
- 8: Instrumententafel eines Kraftfahrzeugs
- 9: Prisma
- 9a: untere Mantelflächenseite eines Prismas
- 10: obere Prismenkante
- 10a: ebene Abfasung der oberen Prismenkante
- 11: lichtabsorbierend ausgebildete Rückseiten der Reflexionsflächen der reflexunterdrückenden Umlenkanordnung
- 12: Umgebungslicht
- 13: Lichtaustrittsebene(n) der reflexunterdrückenden Umlenkanordnung
- 13a: Lichtaustrittsfläche eines Prismas
- 14: Abdeckfläche
- 15: Kraftfahrzeug
- 16: Lichtaustrittsöffnung einer herkömmlichen HUD-Projektionseinheit
- 16a: Rand der Lichtaustrittsöffnung
- 17: Projektionsbereich der Blickfeldanzeigevorrichtung in der Frontscheibe aus Fahrersicht
- 17a: Begrenzung des Projektionsbereichs aus Fahrersicht
- 18: Projektionsbereich der Blickfeldanzeigevorrichtung in der Frontscheibe aus Beifahrersicht
- 18a: Begrenzung des Projektionsbereichs aus Beifahrersicht
- 19: Projektionsbereich einer herkömmlichen HUD-Projektionseinheit
- 19a: Begrenzung des Projektionsbereichs der herkömmlichen HUD-Projektionseinheit
- 20: vorausliegendes bzw. hinter der Projektionsscheibe liegendes Umfeld
- 21: sichtbare Streifen
- 22: nicht sichtbare Streifen
- 23: Bilderzeugungseinheit
- 24: Steuerungseinheit
- 25: Eye-Tracking-Einheit
- 26: Umfelderfassungseinheit
- 27: kontaktanalog eingeblendeter Abbiegepfeil
- 28: erfasstes Fremdfahrzeug vor dem eigenen Kraftfahrzeug
- 29: kontaktanalog eingeblendete Markierung des erfassten Fremdfahrzeugs
- 30: kontaktanalog eingeblendete Spurmarkierung
- 31: statisch eingeblendetes weiteres virtuelles Anzeigebild einer zusätzlich vorgesehenen herkömmlichen HUD-Projektionseinheit
- 32: kontaktanalog eingeblendeter Markierungspfeil
- 32a, 32b: fürs linke und rechte Auge erzeugte Einzelbilder eines 3D-Objekts
- 33, 34, 35: erfasster aktueller Hintergrund
- 61, 62: auf benachbarte Reflexionsflächen aufgeteilte Objektanteile
- 61a: Überlapp
- 63: Übergangsstreifen
- 75: Kaschiertextur
- 76: waagerechte Strukturen der Kaschiertextur
- 77a, 77b: hohes Sichtfeld für große, tieferes Sichtfeld für kleine Fahrer
- L: Projektionslichtstrahlenbündel
- A: Querschnittsfläche eines Prismas
- K: Linie aus Benutzersicht, auf der obere Kanten der mehreren Reflexionsflächen liegen

## Patentansprüche

1. Verfahren zum Betreiben einer Blickfeldanzeigevorrichtung (1), insbesondere für ein Kraftfahrzeug (15), umfassend:
- eine elektrisch ansteuerbare flächige Pixelanordnung (2) zur Erzeugung eines Projektionslichtstrahlenbündels (L) mit einem Anzeigeinhalt sowie
- - eine darauf angeordnete reflexunterdrückende Umlenkanordnung (3) mit einer oder mehreren sich entlang der flächigen Pixelanordnung (2) in einem vorbestimmten spitzen Winkel dazu und parallel zueinander erstreckenden ebenen Reflexionsfläche(n) (4, 40), die zum Umlenken des erzeugten Projektionslichtstrahlenbündels (L) zu dessen Projektion auf eine teilweise transparente reflektierende Projektionsscheibe, insbesondere eine Frontscheibe (5) des Kraftfahrzeugs (15), ausgebildet ist/sind, wodurch dahinter ein in ein Blickfeld eines Benutzers (6) eingeblendetes virtuelles Anzeigebild (27, 29, 30) erzeugt wird, wobei die eine oder die mehreren Reflexionsfläche(n) (4, 40) auf deren Rückseite(n) (11) zu einer Störreflexunterdrückung lichtabsorbierend ausgebildet ist/sind,
wobei mindestens ein (Fahr-)Situationsparameter bereitgestellt wird, abhängig von welchem jeweils unterschiedliche Flächensegmente der flächigen Pixelanordnung (2) zur Erzeugung eines gewünschten Anzeigeinhalts genutzt werden.

2. Verfahren nach Anspruch 1, wobei das Bereitstellen mindestens eines (Fahr-)Situationsparameters das Erfassen einer aktuellen Benutzerposition, insbesondere einer Augenposition oder einer Blickrichtung, umfasst und abhängig von dieser bei einer Aufteilung eines darzustellenden Objekts auf zwei oder mehr der sich entlang der flächigen Pixelanordnung (2) parallel zueinander erstreckenden ebenen Reflexionsflächen (4, 40)
- ein derartiger seitlicher Versatz von auf benachbarte Reflexionsflächen (4, 40) zukommenden Objektanteilen (61, 62) innerhalb der flächigen Pixelanordnung (2) erzeugt wird, dass der Aufteilung entsprechende Anteile des virtuellen Objekts bei seitlichen Verschiebungen des Kopfes des Benutzers (6) parallaxenfrei dargestellt sind; und/oder
- Überlapp (61a) von auf benachbarte Reflexionsflächen (4, 40) zukommenden Objektanteilen (61, 62) innerhalb der flächigen Pixelanordnung (2) derart erzeugt wird, dass der Aufteilung entsprechende Anteile des virtuellen Objekts selbst bei schnellen vertikalen Verschiebungen des Kopfes des Benutzers (6) ohne Unterbrechungen ineinander übergehen; und/oder
- zur Vermeidung eines sichtbaren Übergangs zwischen der Aufteilung entsprechenden Anteilen des virtuellen Anzeigebilds dessen in vertikaler Richtung kleinere Objekte jeweils in einem Flächensegment der flächigen Pixelanordnung (2) erzeugt werden, das einer einzelnen Reflexionsfläche (4, 40) zukommt, und/oder dessen in vertikaler Richtung größere Objekte mit einer eine horizontale Struktur (76) aufweisenden Kaschiertextur (75) versehen werden.

3. Verfahren nach Anspruch 1 oder 2, bei dem
- das Bereitstellen mindestens eines (Fahr-)Situationsparameters das Erfassen eines aktuellen Umfelds hinter der Projektionsscheibe und/oder einer aktuellen Benutzerposition, insbesondere einer Augenposition oder einer Blickrichtung, umfasst und
- abhängig von dem erfassten aktuellen Umfeld und/oder der erfassten aktuellen Benutzerposition vorbestimmte statisch darzustellende Anzeigeinhalte in einem solchen Flächensegment der flächigen Pixelanordnung (2) erzeugt werden, dass ein Hintergrund des entsprechenden virtuellen Anzeigebilds hinter der Projektionsscheibe vorbestimmten Anforderungen an die Dunkelheit genügt.

4. Verfahren nach einem der vorhergehenden Ansprüche, bei dem das Bereitstellen mindestens eines (Fahr-)Situationsparameters das Erfassen eines aktuellen Hintergrunds für vorbestimmte kontaktanalog darzustellende virtuelle Objekte (32) hinter der Projektionsscheibe und/oder einer aktuellen Benutzerposition, insbesondere einer Augenposition oder einer Blickrichtung, umfasst und abhängig davon die vorbestimmten kontaktanalog darzustellenden Objekte
- durch Anpassung ihrer Position innerhalb der flächigen Pixelanordnung (2) einer Position des erfassten aktuellen Hintergrunds innerhalb der Projektionsscheibe und/oder der erfassten aktuellen Benutzerposition dynamisch nachgeführt werden; und/oder
- an eine Entfernung des erfassten aktuellen Hintergrunds (33, 34, 35) durch Anpassung von Objektgrößen und/oder bei einer 3D-Darstellung der Abstände der Einzelbilder (32a, 32b) fürs linke und rechte Auge (66a, 66b) innerhalb der flächigen Pixelanordnung (2) angepasst werden;
- wobei jeweils vorzugsweise eine Helligkeit dieser Objekte an eine Helligkeit des erfassten aktuellen Hintergrunds angepasst wird.

5. Verfahren nach einem der vorhergehenden Ansprüche, wobei die Blickfeldanzeigevorrichtung (1) in einem Kraftfahrzeug (15) montiert ist, der bereitgestellte mindestens eine Fahrsituationsparameter jeweils aktuell einen Bewegungs- und/oder Steuerungszustand des Kraftfahrzeugs (15) und/oder einen Bordsystemzustand und/oder einen Insassenzustand, insbesondere deren Anzahl und Position im Kraftfahrzeug (15), und/oder ein vorausliegendes Umfeld (20) und/oder vorausliegende Streckendaten umfasst und abhängig davon in das Blickfeld des Fahrers und/oder weiterer Insassen über jeweils geeignete Flächensegmente der flächigen Pixelanordnung (2)
- kontaktanaloge Anzeigeinhalte, insbesondere virtuelle Objektbilder und/oder -Markierungen (27, 29, 30), zur Unterstützung des Fahrers und/oder zur Verdeutlichung einer Fahrsituation für ihn und weitere Insassen beim assistierten oder hoch- oder vollautomatisierten Fahren eingeblendet werden; und/oder
- vorbestimmte statische Anzeigeinhalte, insbesondere sicherheitsrelevante Angaben zum Bordsystemzustand und/oder zu Streckendaten, für den Fahrer und/oder weitere Insassen beim assistierten oder hoch- oder vollautomatisierten Fahren eingeblendet werden; und/oder
- Entertainment-Inhalte für einen oder mehrere Insassen, insbesondere bei Fahrzeugstillstand oder hoch- oder vollautomatisiertem Fahren, eingeblendet werden, wobei vorzugsweise den jeweiligen Flächensegmenten der flächigen Pixelanordnung (2) entsprechende Flächensegmente der Frontscheibe (5) zur Erzeugung eines Kinoerlebnisses zwischen transparent und dunkel schaltbar sind; und/oder
- vorbestimmte, z. B. sicherheitsrelevante oder gesetzlich vorgeschriebene, Angaben über zur Erzeugung zumindest teilweise p-polarisierten Lichts ausgebildete Flächensegmente der flächigen Pixelanordnung (2) erzeugt werden, wobei entsprechende Flächensegmente der Frontscheibe (5) zur Reflexion p-polarisierten Lichts ausgebildet sind.

6. Verfahren nach einem der vorhergehenden Ansprüche, wobei das Bereitstellen mindestens eines (Fahr-)Situationsparameters das Erfassen einer aktuellen Benutzerposition, insbesondere einer Augenposition oder einer Blickrichtung, umfasst und abhängig davon
- obere Kanten der mehreren zueinander parallelen Reflexionsflächen (4) der reflexunterdrückenden Umlenkanordnung (3) aus der Sicht des Benutzers (6) im Wesentlichen auf eine zu den Augen des Benutzers (6) führende Linie (K) ausgerichtet werden; und/oder
- Flächensegmente der flächigen Pixelanordnung (2), deren Licht außerhalb aktueller Eyeboxen aller Benutzer (6) liegt, als blendfreie Innenraum-Beleuchtungsquelle genutzt werden.

7. Verfahren nach einem der vorhergehenden Ansprüche, wobei mindestens eine der Reflexionsflächen (4, 40) der reflexunterdrückenden Umlenkanordnung (3) durch eine Mantelflächenseite eines auf der flächigen Pixelanordnung (2) angeordneten Prismas (9), beispielsweise mit einer dreieckigen, viereckigen, insbesondere trapezförmigen, oder fünfeckigen Querschnittsfläche (A), gebildet ist,
wobei das Bereitstellen mindestens eines (Fahr-)Situationsparameters vorzugsweise das Erfassen einer aktuellen Blickrichtung des Benutzers (6) umfasst und abhängig davon eine ebene, insbesondere waagerechte, Abfasung (10a) einer oder mehrerer oberer Prismenkanten (10) im Wesentlichen entlang der erfassten Blickrichtung des Benutzers (6) unter Berücksichtigung der Reflexion an der Projektionsscheibe ausgerichtet wird.

8. Verfahren nach einem der vorhergehenden Ansprüche, wobei
- für jeweils zwei benachbarte Reflexionsflächen (4) eine Lichtaustrittsebene (13), die eine obere Kante der einen Reflexionsfläche (4) und die untere Kante der Rückseite (11) der nächsten Reflexionsfläche (4) verbindet, im Betrieb der Blickfeldanzeigevorrichtung (1) im Wesentlichen senkrecht zu der Projektionsscheibe ausgerichtet ist.

9. Computerprogramm, welches, wenn es in einer Steuerungseinheit (24) ausgeführt wird, dazu eingerichtet ist, ein Verfahren nach einem der vorhergehenden Ansprüche in einem Kraftfahrzeug nach Anspruch 10 auszuführen.

10. Kraftfahrzeug (15), umfassend:
- eine sich zwischen einer Frontscheibe (5) des Kraftfahrzeugs (15) und einer Instrumententafel (8) erstreckende Oberseite (7) der Instrumententafel;
- eine auf oder in der Oberseite (7) der Instrumententafel (8) angeordnete Blickfeldanzeigevorrichtung (1), aufweisend eine elektrisch ansteuerbare flächige Pixelanordnung (2) zur Erzeugung eines Projektionslichtstrahlenbündels (L) mit einem Anzeigeinhalt sowie eine darauf angeordnete reflexunterdrückende Umlenkanordnung (3) mit einer oder mehreren sich entlang der flächigen Pixelanordnung (2) in einem vorbestimmten spitzen Winkel dazu und parallel zueinander erstreckenden ebenen Reflexionsfläche(n) (4, 40), die zum Umlenken des erzeugten Projektionslichtstrahlenbündels (L) zu dessen Projektion auf die Frontscheibe (5) des Kraftfahrzeugs (15) ausgebildet ist/sind, wodurch dahinter ein in ein Blickfeld des Fahrers und/oder weiterer Insassen eingeblendetes virtuelles Anzeigebild (27, 29, 30) erzeugt wird, wobei Rückseite(n) (11) der Reflexionsfläche(n) (4, 40) zu einer Störreflexunterdrückung lichtabsorbierend ausgebildet ist/sind; und
- eine Steuerungseinheit (24) für die Blickfeldanzeigevorrichtung (1), wobei die Steuerungseinheit (24) zum automatischen Durchführen eines Verfahrens nach einem der Ansprüche 1 bis 8 ausgebildet ist;
- wobei vorzugsweise die flächige Pixelanordnung (2) oder die reflexunterdrückende Umlenkanordnung (3) im Wesentlichen bündig zu der Oberseite (7) der Instrumententafel (8) angeordnet ist.

## Claims

1. Method for operating a head-up display device (1), in particular for a motor vehicle (15), comprising:
- an electrically controllable planar pixel arrangement (2) for generating a projection light beam (L) having a display content, and
- a reflection-suppressing deflection arrangement (3) arranged thereon and having one or a plurality of flat reflection surface(s) (4, 40) extending along the planar pixel arrangement (2) at a predetermined acute angle with respect thereto and parallel to one another, said reflection surface(s) being configured for deflecting the generated projection light beam (L) for the purpose of projecting the latter onto a partly transparent reflective projection screen, in particular a windscreen (5) of the motor vehicle (15), whereby a virtual display image (27, 29, 30) inserted into a field of view of a user (6) is generated behind it, wherein said one or said plurality of reflection surface(s) (4, 40) is/are configured to be light-absorbing on its (their) rear side(s) (11) for suppression of disturbing reflections, wherein at least one (driving) situation parameter is provided, depending on which different area segments of the planar pixel arrangement (2) are used in each case for generating a desired display content.

2. Method according to Claim 1, wherein providing at least one (driving) situation parameter comprises capturing a current user position, in particular an eye position or a viewing direction, and depending on this, in the case where an object to be represented is apportioned between two or more of the flat reflection surfaces (4, 40) extending along the planar pixel arrangement (2) parallel to one another,
- a lateral offset of object portions (61, 62) allotted to adjacent reflection surfaces (4, 40) within the planar pixel arrangement (2) is generated such that portions of the virtual object that correspond to the apportionment are represented without parallax in the case of lateral displacements of the head of the user (6); and/or
- overlap (61a) of object portions (61, 62) allotted to adjacent reflection surfaces (4, 40) within the planar pixel arrangement (2) is generated in such a way that portions of the virtual object that correspond to the apportionment merge into one another without interruptions even in the case of rapid vertical displacements of the head of the user (6); and/or
- in order to avoid a visible transition between portions of the virtual display image that correspond to the apportionment, the smaller objects of said image in the vertical direction are each generated in an area segment of the planar pixel arrangement (2) which is allotted to an individual reflection surface (4, 40), and/or the larger objects of said image in the vertical direction are provided with a concealing texture (75) having a horizontal structure (76).

3. Method according to Claim 1 or 2, wherein
- providing at least one (driving) situation parameter comprises capturing a current environment behind the projection screen and/or a current user position, in particular an eye position or a viewing direction, and
- depending on the captured current environment and/or the captured current user position, predetermined display contents to be represented statically are generated in an area segment of the planar pixel arrangement (2) such that a background of the corresponding virtual display image behind the projection screen satisfies predetermined requirements in regard to darkness.

4. Method according to any of the preceding claims, wherein providing at least one (driving) situation parameter comprises capturing a current background for predetermined virtual objects (32) to be represented in a contact-analog manner behind the projection screen and/or a current user position, in particular an eye position or a viewing direction, and depending thereon, the predetermined objects to be represented in a contact-analog manner
- are dynamically tracked, by adaptation of their position within the planar pixel arrangement (2), to a position of the captured current background within the projection screen and/or the captured current user position; and/or
- are adapted to a distance of the captured current background (33, 34, 35) by adaptation of object sizes and/or, in the case of a 3D representation, the spacings of the individual images (32a, 32b) for the left and right eyes (66a, 66b) within the planar pixel arrangement (2) ;
- wherein in each case preferably a brightness of these objects is adapted to a brightness of the captured current background.

5. Method according to any of the preceding claims, wherein the head-up display device (1) is mounted in a motor vehicle (15), the at least one driving situation parameter provided in each case currently comprises a movement and/or control state of the motor vehicle (15) and/or an onboard system state and/or an occupant state, in particular the number and position thereof in the motor vehicle (15), and/or an upcoming environment (20) and/or upcoming route data and, depending thereon, into the field of view of the driver and/or further occupants via respectively suitable area segments of the planar pixel arrangement (2)
- contact-analog display contents, in particular virtual object images and/or markings (27, 29, 30), for assisting the driver and/or for clarifying a driving situation for the driver and further occupants in the case of assisted or highly automated or fully automated driving are inserted; and/or
- predetermined static display contents, in particular safety-relevant indications concerning the onboard system state and/or concerning route data, for the driver and/or further occupants in the case of assisted or highly automated or fully automated driving are inserted; and/or
- entertainment contents for one or more occupants, in particular in the case of a stationary vehicle or highly automated or fully automated driving, are inserted, wherein preferably area segments of the windscreen (5) that correspond to the respective area segments of the planar pixel arrangement (2) are switchable between transparent and dark in order to create a cinema experience; and/or
- predetermined, e.g. safety-relevant or legally prescribed, indications are generated via area segments of the planar pixel arrangement (2) that are configured for generating at least partly p-polarized light, wherein corresponding area segments of the windscreen (5) are configured for reflecting p-polarized light.

6. Method according to any of the preceding claims, wherein providing at least one (driving) situation parameter comprises capturing a current user position, in particular an eye position or a viewing direction, and depending thereon
- upper edges of the plurality of mutually parallel reflection surfaces (4) of the reflection-suppressing deflection arrangement (3), from the viewpoint of the user (6), are substantially aligned with a line (K) leading to the eyes of the user (6); and/or
- area segments of the planar pixel arrangement (2) whose light is located outside current eyeboxes of all users (6) are used as a glare-free interior lighting source.

7. Method according to any of the preceding claims, wherein at least one of the reflection surfaces (4, 40) of the reflection-suppressing deflection arrangement (3) is formed by a lateral surface side of a prism (9) arranged on the planar pixel arrangement (2), for example having a triangular, quadrilateral, in particular trapezium-shaped, or pentagonal cross-sectional area (A),
wherein providing at least one (driving) situation parameter preferably comprises capturing a current viewing direction of the user (6) and, depending thereon, a flat, in particular horizontal, chamfer (10a) of one or more upper prism edges (10) is aligned substantially along the captured viewing direction of the user (6) taking into account the reflection at the projection screen.

8. Method according to any of the preceding claims, wherein
- for each two adjacent reflection surfaces (4), a light exit plane (13) connecting an upper edge of one reflection surface (4) and the lower edge of the rear side (11) of the nearest reflection surface (4) is aligned substantially perpendicular to the projection screen during operation of the head-up display device (1) .

9. Computer program which, when it is executed in a control unit (24), is designed to carry out a method according to any of the preceding claims in a motor vehicle according to Claim 10.

10. Motor vehicle (15), comprising:
- a top side (7) of an instrument panel (8) extending between a windscreen (5) of the motor vehicle (15) and the instrument panel;
- a head-up display device (1) arranged on or in the top side (7) of the instrument panel (8), comprising an electrically controllable planar pixel arrangement (2) for generating a projection light beam (L) having a display content, and a reflection-suppressing deflection arrangement (3) arranged thereon and having one or a plurality of flat reflection surface(s) (4, 40) extending along the planar pixel arrangement (2) at a predetermined acute angle with respect thereto and parallel to one another, said reflection surface(s) being configured for deflecting the generated projection light beam (L) for the purpose of projecting the latter onto the windscreen (5) of the motor vehicle (15), whereby a virtual display image (27, 29, 30) inserted into a field of view of the driver and/or further occupants is generated behind it, wherein rear side(s) (11) of the reflection surface(s) (4, 40) is/are configured to be light-absorbing for suppression of disturbing reflections; and
- a control unit (24) for the head-up display device (1), wherein the control unit (24) is configured for automatically carrying out a method according to any of Claims 1 to 8;
- wherein preferably the planar pixel arrangement (2) or the reflection-suppressing deflection arrangement (3) is arranged substantially flush with the top side (7) of the instrument panel (8).

## Revendications

1. Procédé de fonctionnement d'un dispositif d'affichage de champ de vision (1), destiné notamment à un véhicule automobile (15) et comprenant :
- un ensemble de pixels sensiblement bidimensionnel (2) commandable électriquement et destiné à générer un faisceau de rayons de lumineux de projection (L) ayant un contenu d'affichage et
- un ensemble de déviation de suppression de réflexion (3) disposé par-dessus comportant une ou plusieurs surfaces de réflexion planes (4, 40) qui s'étendent le long de l'ensemble de pixels sensiblement bidimensionnel (2) suivant un angle aigu prédéterminé par rapport à celui-ci et parallèlement les unes aux autres et qui sont conçues pour dévier le faisceau de rayons lumineux de projection (L) généré afin de le projeter sur un écran de projection réfléchissant partiellement transparent, en particulier un pare-brise (5) du véhicule automobile (15), ce qui permet de générer derrière une image d'affichage virtuelle (27, 29, 30) qui s'insère dans le champ de vision d'un utilisateur (6), les une ou plusieurs surfaces de réflexion (4, 40) étant conçues pour absorber la lumière sur leur(s) face(s) arrière (11) afin de supprimer les réflexions parasites,
au moins un paramètre de situation (de conduite) étant fourni, en fonction duquel différents segments de surface de l'ensemble de pixels sensiblement bidimensionnel (2) sont utilisés pour générer un contenu d'affichage souhaité.

2. Procédé selon la revendication 1, la fourniture d'au moins un paramètre de situation (de conduite) comprenant la détection d'une position d'utilisateur actuelle, en particulier d'une position des yeux ou d'une direction de visualisation, et en fonction de cela, lorsqu'un objet à afficher est divisé sur deux ou plusieurs des surfaces de réflexion planes (4, 40) qui s'étendent parallèlement à les unes aux autres le long de l'ensemble de pixels sensiblement bidimensionnel (2)
- un tel décalage latéral de parties d'objet (61, 62) qui arrivent sur des surfaces de réflexion adjacentes (4, 40) est généré à l'intérieur de l'ensemble de pixels sensiblement bidimensionnel (2) de manière à ce que des parties de l'objet virtuel correspondant à la division soient représentées sans parallaxe lorsque la tête de l'utilisateur (6) est déplacée latéralement ; et/ou
- un chevauchement (61a) de parties d'objet (61, 62) qui arrivent sur des surfaces de réflexion adjacentes (4, 40) est généré à l'intérieur de l'ensemble de pixels sensiblement bidimensionnel (2) de manière à ce que des parties de l'objet virtuel correspondant à la division se confondent sans interruption même lorsque la tête de l'utilisateur (6) se déplace verticalement rapidement ; et/ou
- pour éviter une transition visible entre des parties de l'image d'affichage virtuelle correspondant à la division, des objets de celle-ci, qui sont plus petits dans la direction verticale, sont générés chacun dans un segment de surface de l'ensemble de pixels sensiblement bidimensionnel (2) qui parvient à une seule surface de réflexion (4, 40), et/ou des objets de celle-ci, plus grands dans la direction verticale, sont pourvus d'une texture stratifiée (75) ayant une structure horizontale (76).

3. Procédé selon la revendication 1 ou 2, dans lequel
- la fourniture d'au moins un paramètre de situation (de conduite) comprend la détection d'un environnement actuel derrière l'écran de projection et/ou d'une position d'utilisateur actuelle, en particulier une position des yeux ou une direction de visualisation, et
- en fonction de l'environnement actuel détecté et/ou de la position d'utilisateur actuelle détectée, des contenus d'affichage prédéterminés à afficher de manière statique sont générés dans un segment de surface de l'ensemble de pixels sensiblement bidimensionnel (2) de telle sorte qu'un arrière-plan de l'image d'affichage virtuelle correspondante derrière l'écran de projection réponde à des exigences d'obscurité prédéterminées.

4. Procédé selon l'une des revendications précédentes, dans lequel la fourniture d'au moins un paramètre de situation (de conduite) comprend la détection d'un arrière-plan actuel pour des objets virtuels prédéterminés (32) à afficher de manière analogue à un contact derrière l'écran de projection et/ou une position d'utilisateur actuelle, en particulier une position des yeux ou une direction de visualisation, et, en fonction de cela, les objets prédéterminés à afficher de manière analogue à un contact
- sont asservis de manière dynamique, par ajustement de leur position à l'intérieur de l'ensemble de pixels sensiblement bidimensionnel (2), à une position de l'arrière-plan actuel détecté à l'intérieur de l'écran de projection et/ou à la position d'utilisateur actuelle détectée ; et/ou
- sont adaptés à une suppression de l'arrière-plan actuel détecté (33, 34, 35), par ajustement de dimensions d'objet et/ou dans une représentation 3D des distances entre les images individuelles (32a, 32b) pour les yeux gauche et droit (66a, 66b) à l'intérieur l'ensemble de pixels sensiblement bidimensionnel (2) ;
- la luminosité de ces objets étant de préférence adaptée à la luminosité de l'arrière-plan actuel détecté.

5. Procédé selon l'une des revendications précédentes, le dispositif d'affichage de champ de vision (1) étant monté dans un véhicule automobile (15), l'au moins un paramètre de situation de conduite fourni comprenant actuellement un état de mouvement et/ou de commande du véhicule automobile (15) et/ou un état du système de bord et/ou un état des occupants, en particulier leur nombre et leur position dans le véhicule automobile (15), et/ou un environnement (20) à venir et/ou des données d'itinéraire à venir et, en fonction de cela, il est prévu d'insérer dans le champ de vision du conducteur et/ou d'autres occupants par le biais de segments de surface appropriés de l'ensemble de pixels sensiblement bidimensionnel (2)
- des contenus d'affichage analogue à un contact, en particulier des images et/ou repères d'objets virtuels (27, 29, 30) afin d'aider le conducteur et/ou de clarifier une situation de conduite pour lui et d'autres passagers lors d'une conduite assistée ou hautement ou entièrement automatisée ; et/ou
- des contenus d'affichage statiques prédéterminés, en particulier des informations pertinentes à la sécurité concernant l'état du système de bord et/ou des données d'itinéraire, à destination du conducteur et/ou d'autres passagers pendant une conduite assistée ou hautement ou entièrement automatisée ; et/ou
- des contenus de divertissement destinés à un ou plusieurs occupants, notamment lorsque le véhicule est à l'arrêt ou en conduite hautement ou entièrement automatisée, des segments de surface du pare-brise (5) correspondant aux segments de surface respectifs de l'ensemble de pixels sensiblement bidimensionnel (2) pouvant de préférence être commutés entre transparent et sombre afin de créer une ambiance cinématographique ; et/ou
- des informations prédéterminées, par exemple pertinentes pour la sécurité ou légalement requises, étant générées qui concernent des segments de surface de l'ensemble de pixels sensiblement bidimensionnel (2) conçus pour générer une lumière au moins partiellement à polarisation p, des segments de surface correspondants du pare-brise (5) étant conçus pour réfléchir la lumière à polarisation p.

6. Procédé selon l'une des revendications précédentes, la fourniture d'au moins un paramètre de situation (de conduite) comprenant la détection d'une position d'utilisateur actuelle, en particulier d'une position des yeux ou d'une direction de visualisation, et en fonction de cela,
- des bords supérieurs des plusieurs surfaces de réflexion (4), parallèles les unes aux autres, de l'ensemble de déviation de suppression de réflexion (3) du point de vue de l'utilisateur (6) étant sensiblement aligné avec une ligne (K) menant aux yeux de l'utilisateur (6) ; et/ou
- des segments de surface de l'ensemble de pixels sensiblement bidimensionnel (2), dont la lumière se trouve à l'extérieur des yeux actuels de tous les utilisateurs (6), étant utilisés comme source d'éclairage d'habitacle non éblouissante.

7. Procédé selon l'une des revendications précédentes, au moins une des surfaces de réflexion (4, 40) de l'ensemble de déviation de suppression de réflexion (3) traversant un côté de surface latérale d'un prisme (9) disposé sur l'ensemble de pixels sensiblement bidimensionnel (2), par exemple avec une forme triangulaire, carrée, en particulier trapézoïdale ou pentagonale (A) en coupe transversale, la fourniture d'au moins un paramètre de situation (de conduite) comprenant de préférence la détection d'une direction de visualisation actuelle de l'utilisateur (6) et, en fonction de cela, un chanfrein plan (10a), en particulier horizontal, d'un ou plusieurs bords de prisme supérieurs (10) étant orienté sensiblement dans la direction de visualisation détectée de l'utilisateur (6) avec prise en compte de la réflexion sur l'écran de projection.

8. Procédé selon l'une des revendications précédentes,
- à chaque fois pour deux surfaces de réflexion (4) adjacentes, un plan de sortie de lumière (13), qui relie un bord supérieur d'une surface de réflexion (4) et le bord inférieur de la face arrière (11) de la surface de réflexion suivante (4), étant orienté perpendiculairement à l'écran de projection pendant le fonctionnement du dispositif d'affichage de champ de vision (1).

9. Programme informatique qui, lorsqu'il est exécuté dans une unité de commande (24), est conçu pour mettre en oeuvre un procédé selon l'une des revendications précédentes dans un véhicule automobile selon la revendication 10.

10. Véhicule automobile (15), comprenant :
- un côté supérieur (7) d'un tableau de bord qui s'étend entre un pare-brise (5) du véhicule automobile (15) et le tableau de bord (8) ;
- un dispositif d'affichage de champ de vision (1) disposé sur ou dans le côté supérieur (7) du tableau de bord (8) et comportant un ensemble de pixels sensiblement bidimensionnel (2) pouvant être commandé électriquement afin de générer un faisceau de rayon lumineux de projection (L) ayant un contenu d'affichage et un ensemble de déviation de suppression de réflexion (3) disposé par-dessus avec une ou plusieurs surfaces de réflexion planes (4, 40) qui s'étendent le long de l'ensemble de pixels sensiblement bidimensionnel (2) suivant un angle aigu prédéterminé par rapport à celui-ci et parallèlement les unes aux autres et qui sont utilisées pour dévier le faisceau de rayons lumineux de projection (L) généré afin de le projeter sur le pare-brise (5) du véhicule automobile (15), ce qui permet de générer derrière une image d'affichage virtuelle (27, 29, 30) insérée dans le champ de vision du conducteur et/ou d'autres occupants, le ou les côtés arrière (11) de la ou des surfaces de réflexion (4, 40) étant conçus pour absorber la lumière afin de supprimer les réflexions parasites ; et
- une unité de commande (24) destinée au dispositif d'affichage de champ de vision (1), l'unité de commande (24) étant conçue pour mettre en oeuvre automatiquement un procédé selon l'une des revendications 1 à 8 ;
- de préférence l'ensemble de pixels sensiblement bidimensionnels (2) ou l'ensemble de déviation de suppression de réflexion (3) étant disposé sensiblement au même niveau que le côté supérieur (7) du tableau de bord (8).
